# EUROPÄISCHE PATENTSCHRIFT

(11) **EP 1 945 935 B1**
(45) Veröffentlichungstag und Bekanntmachung des Hinweises auf die Patenterteilung: **15.09.2010**
(21) Anmeldenummer: 06808903.6
(22) Anmeldetag: 27.09.2006
(51) Int. Cl.: F02M 43/00, F02M 37/00, F02D 19/06, F02D 19/08

(54) **KRAFTSTOFFZUFÜHRUNGSEINRICHTUNG FÜR EINEN DIESELMOTOR UND VERFAHREN ZUM BETREIBEN EINER KRAFTSTOFFZUFÜHRUNGSEINRICHTUNG FÜR EINEN DIESELMOTOR**
FUEL SUPPLY DEVICE FOR A DIESEL ENGINE AND METHOD FOR OPERATING A FUEL SUPPLY DEVICE FOR A DIESEL ENGINE
DISPOSITIF D'AMENEE DE CARBURANT POUR UN MOTEUR DIESEL ET PROCEDE D'UTILISATION D'UN DISPOSITIF D'AMENEE DE CARBURANT POUR UN MOTEUR DIESEL

(30) Priorität: 04.11.2005 DE 102005053095
(43) Veröffentlichungstag der Anmeldung: 23.07.2008
(73) Patentinhaber: Sellentin, Alexander, 91781 Weissenburg (DE)
(72) Erfinder: Sellentin, Alexander, 91781 Weissenburg (DE)
(74) Vertreter: Schlögl, Markus
(86) Internationale Anmeldenummer: PCT/IB2006/002688
(87) Internationale Veröffentlichungsnummer: WO 2007/052099

(56) Entgegenhaltungen:
- DE-A1- 10 140 071
- DE-A1-102004 011 414
- DE-C1- 19 609 800
- GB-A- 2 058 211
- US-A- 4 620 568

## Beschreibung

Die Erfindung betrifft eine Kraftstoffzuführungseinrichtung für einen Dieselmotor und ein Verfahren zum Betreiben einer Kraftstoffzuführungseinrichtung für einen Dieselinotor.

Es ist bekannt, dass Dieselmotoren wahlweise mit Dieselkraftstoff oder mit Pflanzenöl bzw. Pflanzenfett betrieben werden können. Die Verwendung von Pflanzenöl bzw. Pflanzenfett bringt neben Vorteilen für die Umwelt (unter anderem CO₂-Reduktion) auch betriebswirtschaftliche Vorteile (beispielsweise aufgrund stetig steigender Dieselpreise) und volkswirtschaftliche Vorteile (zum Beispiel wegen geringerer Abhängigkeit vom begrenzten Rohstoff. Erdöl) mit sich.

Besondere Bedeutung kommt dabei der Verwendung von Altpflanzenöl bzw. Altpflanzenfett für den Betrieb eines Dieselmotors zu. Diese Öle und Fette müssten, wenn sie keiner geeigneten Verwendung zugeführt werden, aufwändig entsorgt werden. Dies erfordert unter anderem eine umfangreiche Rückführ- und Sammellogistik. Es ist daher wünschenswert, Altpflanzenöl und Altpflanzenfett möglichst einfach am Anfallort zu verwerten, beispielsweise zum Betrieb eines ohnehin vorhandenen Dieselmotors, beispielsweise in einem Kraftfahrzeug oder einem Boot. Für den Nutzer sinken oder entfallen dadurch die Entsorgungskosten für seine Altpflanzenöle und -fette, ferner reduzieren sich die Betriebskosten für den Dieselmotor (er muss weniger Diesel kaufen) und es wird ein Beitrag zur CO₂-Reduktion aufgrund der Verwendung nachwachsender Rohstoffe (Pflanzenöl, Pflanzenfett) geleistet.

Problematisch ist jedoch, dass viele der bereits vorhandenen Dieselmotoren nicht einfach statt Diesel mit Pflanzenöl bzw. Pflanzenfett betrieben werden können. Pflanzenöl hat den Nachteil, dass es aufgrund seiner Eigenschaften, insbesondere seiner hohen Viskosität, das heißt seiner Zähflüssigkeit, nicht beim Starten eines kalten Dieselmotors verwendbar ist und auch der Kaltlauf eines Dieselmotors mit Pflanzenöl nicht zufriedenstellend möglich ist. Bereits vorhandene Dieselmotoren müssen daher in geeigneter Weise für den Betrieb mit Pflanzenktaftstoffen nachgerüstet werden, neu hergestellte Motoren müssen entsprechend vorbereitet sein.

Aus DE 198 23 335 A1 ist bekannt, neben Pflanzenkraftstoff, der nur für einen Warmlaufbetrieb des Motors eingesetzt wird, auch herkömmlichen Dieselkraftstoff zu bevorraten, der dann beim Motorstart und während der Kaltlaufphase eingesetzt wird. Zu gegebener Zeit wird zwischen beiden Kraftstoffen hin und her geschaltet. Diese Lösung wird nachfolgend als Zweitanksystem bezeichnet.

Aus DE 101 40 071 A1 ist alternativ hierzu bekannt, den Pflanzenktaftstoff vor der Einsptitzvorrichtung auf die Motorbetziebstemperatur, etwa 90°C, zu exwärmen und dadurch eine niedrige Viskosität (geringe Zähflüssigkeit) des Pflanzenkraftstoffs zu erreichten. Auf diese Weise soll es möglich sein, den Dieselmotor allein mit Pflanzenkraftstoff, auch in der Startphase, zu betreiben. Diese Lösung wird nachfolgend als Vorerwärmungssystem bezeichnet.

Jedoch führten die bisher bekannten Lösungen nicht zu befriedigenden Ergebnissen im Dauerbetrieb. Beispielsweise treten Rußablagerungen auf, die dazu führen, dass Ventile und Dichtungen des Motors regelmäßig gereinigt werden müssen. Da dies in der Praxis häufig nicht gemacht wird, führt der Betrieb mit Pflanzenkraftstoff in vielen Fällen zu Motorstörungen bis hin zum Motorausfall.

Aus DE 196 09 800 C1 ist ein Brennstoffeinspritzsystem für Emulsionsbetrieb für einen Dieselmotor mit durch eine Hochdruckpumpeinrichtung über einen gemeinsamen Vorspeicher mit Brennstoff versorgten Brennstoffeinspritzeinrichtungen bekannt, wobei der Motor wahlweise mit reinem Brennstoff (Diesel) oder einer Emulsion des Brennstoffs mit einem gegenüber dem Brennstoff unlösbaren weiteren Stoff (Wasser) betreibbar ist.

Der vorliegenden Erfindung liegt die Aufgabe zugrunde, eine Kraftstoffzuführungseinrichtung und ein Verfahren zum Betreiben einer Kraftstoffzuführungseinrichtung anzugeben, mit der ein Dieselmotor auch mit Pflanzenöl und/oder Pflanzenfett, insbesondere Altpflanzenöl und/oder Altpflanzenfett, betreibbar ist und mit der bzw. dem die vorgenannten Nachteile des Standes der Technik zumindest teilweise überwunden werden.

Diese Aufgabe wird gemäß der Erfindung hinsichtlich der Vorrichtung durch eine Kraftstoffzuführungseinrichtung mit den Merkmalen nach Anspruch 1 und hinsichtlich des Verfahrens durch ein Verfähren zum Betreiben einer Kraftstoffzuführungseinrichtung mit den Merkmalen nach Anspruchs 11 gelöst. Vorteilhafte Ausgestaltungen und Weiterbildungen sind in den von Anspruch 1 bzw. Anspruch 11 abhängigen Ansprüchen angegeben.

Anspruch 1 sieht vor eine Kraftstoffzuführungseinrichtung für einen Dieselmotor mit mindestens einer Einspritzpumpe (auch; Einspritzanlage, Einspritzvorrichtung), die eine Einspritzdüse mit Kraftstoff versorgt und die einen Kraftstoffzulauf und einen Kraftstofftücklauf aufweist, wobei die Kraftstoffzuführungseinrichtung umfasst
a) mindestens einen ersten Tank für Dieselkraftstoff,
b) mindestens einen zweiten Tank für Pflanzenöl und/oder -fett, insbesondere Altpflanzenöl und/oder -fett,
c) mindestens einen dritten Tank zur Aufnahme eines Gemisches aus dem Dieselkraftstoff und dem Pflanzenöl und/oder -fett,
d) wobei jeder der mindestens drei Tanks mindesten einen Kraftstoffauslass aufweist,
e) ein Kraftstoffleitungen und Kraftstoffventile umfassendes Kraftstoffleitungssystem,
   e1) das die Kraftstoffauslässe aller Tanks mit dem Kraftstoffzulauf der Einspritzpumpe verbindet und
   e2) das den Kraftstoffrücklauf der Einspritzpumpe mit einem Kraftstoffeinlass des ersten Tanks und einem Kraftstoffeinlass des dritten Tanks verbindet,
f) eine Steuereinheit zur Steuerung des Kraftstoffflusses durch das Kraftstoffleitungssystem,
g) wobei in einem ersten Zustand des Kraftstoffleitungssystems ausschließlich Dieselkraftstoff aus dem ersten Tank an den Kraftstoffszulauf der Einspritzpumpe förderbar ist und Dieselkraftstoff aus dem Kraftstoffrücklauf der Einspritzpumpe, ausschließlich an den Kraftstoffeinlass des ersten Tanks förderbar ist,
h) wobei in einem zweiten Zustand des Kraftstoffleitungssystems Dieselkraftstoff aus dem ersten Tank und Pflanzenöl und/oder -fett aus dem zweiten Tank unter vorausgehender Mischung im Kraftstoffleitungssystem an den Kraftstoffzulauf der Einspritzpumpe förderbar ist und das Gemisch aus dem Kraftstoffrücklauf der Einspritzpumpe ausschließlich an den Kraftstoffeinlass des dritten Tanks förderbar ist, und
i) wobei in einem dritten Zustand des Kraftstoffleitungssystems ausschließlich das Gemisch aus Dieselkraftstoff und Pflanzenöl- und/oder -fett aus dem dritten Tank an den Kraftstoffzulauf der Einspritzpumpe förderbar ist und das Gemisch aus dem Kraftstoffrücklauf der Einspritzpumpe ausschließlich an den Kraftstoffeinlass des dritten Tanks förderbar ist.

Bei der vorgeschlagenen Lösung handelt es sich somit um eine Dreitanklösung. Im Unterschied zur eingangs angeführten Zweitanklösung ist ein zusätzlicher Tank für ein Kraftstoffgemisch aus Dieselkraftstoff und Pflanzenkraftstoff vorgesehen.

Ein Unterschied zur eingangs beschriebenen Vorerwärmungslösung liegt darin, dass die Verbesserung der Viskositätseigenschaften des Kraftstoffs nicht allein durch Erwärmung erreicht wird, sondern insbesondere durch Erzeugung und Verwendung eines Kraftstoffgemisches aus Dieselkraftstoff und Pflanzenkraftstoff. Das Gemisch weist eine geeignete Viskosität bereits bei Temperaturen von ca. 60°C bis 70°C auf, im Gegensatz zu ca. 90°C beim Vorerwärmungssystem gemäß Stand der Technik. Die Brandgefahr und die Gefahr von Motorschäden ist daher bei der Lösung nach der Erfindung deutlich geringe.

Die Kraftstoffzufühtungseinrichtung nach der Erfindung ist völlig anders aufgebaut als die aus dem Stand der Technik vorgesehen Lösungen. Die Zweitanklösung sieht lediglich zwei Zustände vor. Im ersten Zustand wird der Dieselmotor mit reinem Dieselkraftstoff versorgt, im zweiten Zustand ausschließlich mit Pflanzenkraftstoff. Bei der erfindungsgemäßen Dreitanklösung hingegen sind mindestens drei verschiedene Zustände der Kraftstoffzuführungseinrichtung einstellbar, was einen an die jeweilige Situation angepassten Betrieb des Dieselmotors mit geeignetem Kraftstoff ermöglicht.

Die Erfindung gibt somit eine Kraftstoffzuführungseinrichtung an, die es ermöglicht, einen Dieselmotor zuverlässig und dauerhaft auch mit Pflanzenöl und/oder Pflanzenfett zu betreiben und dadurch die Betriebskosten des Dieselmotors deutlich zu senken, die Entsorgungskosten für Altöl zumindest zu reduzieren und einen Beitrag zur CO₂-Reduktion zu leisten.

Gemäß einer bevorzugten Weiterbildung ist vorgesehen, dass in einem vierten Zustand des Kraftstoffleitungssystems ausschließlich Dieselkraftstoff aus dem ersten Tank an den Kraftstoffzulauf der Einspritzpumpe förderbar ist und der Dieselkraftstoff und/oder noch vorhandene Gemischreste aus dem Kraftstoffrücklauf der Einspritzpumpe ausschließlich an den Kraftstoffeinlass des dritten Tanks förderbar sind.

Vorteilhaft ist, wenn das Kraftstoffleitungssystem mindestens ein Mischventil zur Bereitstellung eines Gemisches aus Dieselkraftstoff aus dem ersten Tank und Pflanzenöl und/oder -fett aus dem zweiten Tank umfasst,

Als besonders vorteilhaft hat es sich erwiesen, wenn das vom Mischventil bereitgestellte Gemisch ein Mischungsvexhältnis im Bereich von 7% Diesel und 93% Pflanzenöl und/oder -fett bis 93% Diesel und 7% Pflanzenöl und/oder -fett aufweist, insbesondere ein Mischverhältnis im Bereich von 15% Diesel und 85% Pflanzenöl und/oder -fett bis 20% Diesel und 80% Pflanzenöl und/oder -fett, vorzugsweise von etwa 18% Diesel und 82% Pflanzenöl und/oder -fett.

Bei einer zweckmäßigen Variante ist das Mischventil zur Regelung und/odex Einstellung des Mischverhältnisses verstellbar, insbesondere kontinuierlich verstellbar. Dabei ist das Mischventil bevorzugt mechanisch und/oder elektrisch verstellbar.

Bei einer vorteilhaften Weiterbildung der Kraftstoffzuführungseinrichtung nach der Erfindung ist mindestens eine Heizeinrichtung zur Erwärmung des Kraftstoffs in das Kraftstoffleitungssystem integriert.

Zweckmäßigerweise ist bei einer Variante mindestens eine erste Heizeinrichtung zur Erwärmung des aus dem zweiten Tank geförderten Pflanzenöls und/oder -fetts nach dessen Austritt aus dem zweiten Tank, das heißt an der an den Ktaftstoffauslass des zweiten Tanks anschließenden Kraftstoffleitung, und/oder mindestens eine zweite Heizeinrichtung zur Erwärmung des Kraftstoffes vor dem Kraftstoffzulauf der Einspritzpumpe und/oder mindestens eine dritte Heizeinrichtung zur Erwärmung des Pflanzenöls und/oder -fetts im zweiten Tank vorgesehen ist.

Einzelne oder alle dieser Heizeinrichtungen können elektrisch betriebene Heizeinrichtung sein. Es sind aber auch Kühlwasser-Wärmetauschet zur Erwärmung des Kraftstoffs einsetzbar. Bevorzugt ist jedoch, dass zumindest eine, insbesondere mehrere oder alle Heizeinrichtung Wärmetauscher sind, die Wärme aus dem von der Einspritzpumpe zu den Tanks zurücklaufenden, in der Einspritzpumpe stark erwärmten Kraftstoff an den von den Tanks zu der Einspritzpumpe hinlaufenden Kraftstoff übertragen. Dadurch wird der der Einspritzpumpe zugeführte Kraftstoff auf die gewünschten erhöhten Temperaturen gebracht, was aufgrund der Zähflüssigkeit bei niedrigen Temperaturen insbesondere für das Pflanzenöl und/oder -fett, aber auch für das Gemisch aus Dieselkraftstoff und Pflanzenöl und/ oder -fett äußerst wichtig ist, da andernfalls der Motor nicht zufriedenstellend funktioniert,

Eine besonders bevorzugte Ausführungsform der Ktaftstoffzuführungseinrichtung sieht vor, dass mindestens ein Filter zur Reinigung des Pflanzenöles und/oder -fettes und/oder des erzeugten Gemisches in das Kraftstoffleitungssystem integriert ist. Von Vorteil ist insbesondere die Kombination von Filter und erster Heizeinrichtung in einem Bauteil, da dadurch durch den Wärmetauscher auch gleich der Filter miterwärmt wird, wodurch seine Funktion verbessert ist.

Die Kraftstoffzuführungseinrichtung nach Anspruch 4, bei der es sich um eine der vorstehend beschriebene Kraftstoffzuführungseinrichtungen handelt, ist dadurch weitergebildet, dass
a) der Kraftstoffauslass des ersten Tanks mit einem ersten Ventil, insbesondere einem 3/2-Ventil, verbunden ist,
b) der Kraftstoffauslass des zweiten Tanks mit einem zweiten Ventil, insbesondere einem 2/2-Ventil, verbunden ist,
c) ein Kraftstoffeinlass des ersten Tanks und ein Kraftstoffeinlass des dritten Tanks mit einem dritten Ventil, insbesondere einem 3/2-Ventil, verbunden sind,
d) das erste Ventil mit einem vierten Ventil, insbesondere einem 3/2-Ventil, verbunden ist,
e) erstes Ventil und zweites Ventil mit einem Mischventil verbunden sind,
f) das Mischventil mit dem vierten Ventil verbunden ist,
g) der Kraftstoffauslass des dritten Tanks mit dem vierten Ventil verbunden ist,
h) das vierte Ventil mit dem Kraftstoffzulauf der Einspritzpumpe verbunden ist, und
i) der Kraftstoffrücklauf der Einspritzpumpe mit dem dritten Ventil verbunden ist,
j) wobei in einem ersten Zustand des Kraftstoffleitungssystems das erste Ventil in eine erste Stellung, das zweite Ventil in eine geschlossene Stellung, das dritte Ventil in eine erste Stellung und das vierte Ventil in eine erste Stellung geschaltet ist, wobei ausschließlich Dieselkraftstoff aus dem ersten Tank an den Kraftstoffzulauf der Einspritzpumpe förderbar ist und Dieselkraftstoff aus dem Kraftstoffrücklauf der Einspritzpumpe ausschließlich an den Kraftstoffeinlass des ersten Tanks förderbar ist,
k) wobei in einem zweiten Zustand des Kraftstoffleitungssystems das erste Ventil in eine zweite Stellung, das zweite Ventil in eine geöffnete Stellung, das dritte Ventil in eine zweite Stellung und das vierte Ventil in eine erste Stellung geschaltet ist, wobei Dieselkraftstoff aus dem ersten Tank und Pflanzenöl und/oder -fett aus dem zweiten Tank zum Mischventil förderbar sind und das Gemisch vom Mischventil an den Kraftstoffzulauf der Einspritzpumpe förderbar ist und das Gemisch aus dem Kraftstoffrücklauf der Einspritzpumpe ausschließlich an den Kraftstoffeinlass des dritten Tanks förderbar ist, und
l) wobei in einem dritten Zustand des Kraftstoffleitungssystems das erste Ventil in eine erste Stellung oder zweite Stellung, das zweite Ventil in eine geschlossene Stellung, das dritte Ventil in eine zweite Stellung und das vierte Ventil in eine zweite Stellung geschaltet ist, wobei ausschließlich das Gemisch aus Dieselkraftstoff und Pflanzenöl und/oder -fett aus dem dritten Tank an den Kraftstoffzulauf der Einspritzpumpe förderbar ist und das Gemisch aus dem Kraftstoffrücklauf der Einspritzpumpe ausschließlich an den Kraftstoffeinlass des dritten Tanks förderbar ist.

Die Vorteile entsprechen den anhand von Anspruch 1 erläuterten Vorteilen.

Von Vorteil ist ferner, wenn in einem vierten Zustand des Kraftstoffleitungssystems das erste Ventil in eine erste Stellung, das zweite Ventil in eine geschlossene Stellung, das dritte Ventil in eine zweite Stellung und das vierte Ventil in eine erste Stellung geschaltet ist, wobei ausschließlich Dieselkraftstoff aus dem ersten Tank an den Kraftstoffzulauf der Einspritzpumpe förderbar ist und der Dieselkraftstoff und/oder noch vorhandene Gemischreste aus dem Kraftstoffrücklauf der Einspritzpumpe ausschließlich an den Kraftstoffeinlass des dritten Tanks förderbar sind,

Zweckmäßigerweise ist nach einer Variante in die Verbindung zwischen zweitem Tank und zweitem Ventil und/oder in die Verbindung zwischen zweitem Ventil und Mischventil mindestens eine erste Heizeinrichtung zur Erwärmung des Kraftstoffs, insbesondere eine elektrisch betriebene Heizeinrichtung, integriert,

Von Vorteil ist auch, in die Verbindung zwischen zweitem Tank und zweitem Ventil und/oder in die Verbindung zwischen zweitem Ventil und Mischventil mindestens einen Filter zu integrierern.

Bevorzugt ist ferner eine Weiterbildung der Kraftstoffzuführungseinrichtung, bei der in die Verbindung zwischen dem vierten Ventil und dem Kraftstoffzulauf der Einspritzpumpe mindestens eine zweite Heizeinrichtung zur Erwärmung des Kraftstoffs, insbesondere eine elektrisch betriebene Heizeinrichtung, integriert ist.

Die Kraftstoffzuführungseinrichtung nach Anspruch 6, bei der es sich ebenfalls um eine der vorstehend beschriebenen Kuftstoffzuführungseinrichtungen handelt, ist zusätzlich gekennzeichnet durch
a) ein Mischventil mit einem Dieseleingang und einem Pflanzenöl und/oder -fett-Eingang und einem Gemischeingang und einem Kraftstoffausgang,
b) wobei in einer Dieselstellung des Mischventils nur der Dieseleingang mit dem Kraftstoffausgang strömungsmäßig verbunden ist,
c) wobei in einer Mischungsstellung des Mischventils der Dieseleingang und der Pflanzenöl und/oder -fett-Eingang, jedoch nicht der Gemischeingang mit dem Kraftstoffausgang strömungsmäßig verbunden sind,
d) wobei in einer Gemischstellung des Mischventils nur der Gemistheingang mit dem Kraftstoffauslass strömungsmäßig verbunden ist,
e) wobei der Kraftstoffauslass des ersten Tanks mit dem Dieseleingang des Mischventils verbunden ist,
f) wobei der Ktaftstoffauslass des zweiten Tanks mit dem Pflanzenöl und/oder -fett-Eingang des Mischventils verbunden ist,
g) wobei ein Kraftstoffeinlass des ersten Tanks und ein Kraftstoffeinlass des dritten Tanks mit einem siebten Ventil, insbesondere einem 3/2-Wege-Ventil, verbunden sind,
h) wobei das Mischventil mit dem Kraftstoffzulauf der Einspritzpumpe verbunden ist,
i) wobei der Kraftstoffrücklauf der Einspritzpumpe mit dem siebten Ventil verbunden ist,
j) wobei in einem ersten Zustand des Kraftstoffleitungssystems das Mischventil in die Dieselstellung und das siebte Ventil in eine erste Stellung geschaltet ist, wobei ausschließlich Dieselkraftstoff aus dem ersten Tank an den Kraftstoffzulauf der Einspritzpumpe förderbar ist und Dieselkraftstoff aus dem Kraftstoffrücklauf der Einspritzpumpe ausschließlich an den Kraftstoffeinlass des ersten Tanks förderbar ist,
k) wobei in einem zweiten Zustand des Kraftstoffleitungssystems das Mischventil in die Mischungsstellung und das siebte Ventil in eine zweite Stellung geschaltet ist, wobei Dieselkraftstoff aus dem ersten Tank und Pflanzenöl und/oder -fett aus dem zweiten Tank zum Mischventil förderbar sind und das Gemisch vom Mischventil an den Kraftstoffzulauf der Einspritzpumpe förderbar ist und das Gemisch aus dem Kraftstoffrücklauf der Einspritzpumpe ausschließlich an den Kraftstoffeinlass des dritten Tanks förderbar ist, und
l) in einem dritten Zustand des Kraftstoffleitungssystems das Mischventil in die Gemischstellung und das siebte Ventil in die zweite Stellung geschaltet ist, wobei ausschließlich das Gemisch aus Dieselkraftstoff und Pflanzenöl und/oder -fett aus dem dritten Tank an den Kraftstoffzulauf der Einspritzpumpe förderbar ist und das Gemisch aus dem Kraftstoffrücklauf der Einspritzpumpe, ausschließlich an den Kraftstoffeinlass des dritten Tanks förderbar ist.

Die Vorteil ergeben sich weitestgehend aus den anhand von Anspruch 1 erläuterten Vorteilen, Ergänzend ist anzuführen, dass dem hier vorgesehene Mischventil als einem Bauteil nicht nur die Aufgabe der Herstellung des Kraftstoffgemisches aus den Ausgangsktaftstoffen zukommt, sondern dass es darüber hinaus die gezielte Zuführung der gewünschten Kraftstoffart (Diesel, Pflanzenöl bzw. -fett, Gemisch) ermöglicht. Hierzu nimmt das Mischventil, gesteuert von der Steuereinheit, verschiedene Stellungen ein (Dieselstellung, Mischungsstellung, Gemischstellung). Der Aufbau wird dadurch deutlich einfacher und überschaubarer als bei der vorhergehend erläuterten Ktaftstoffzuführungseinrichtung, er sind weniger Ventile und Verbindungsleitungen erforderlich. Dies vereinfacht die Herstellung und reduziert die Herstellungskosten.

Von Vorteil ist ferner, wenn in einem vierten Zustand des Kraftstoffleitungssystems das Mischventil in den Dieselzustand und das siebte Ventil in die zweite Stellung geschaltet ist, wobei ausschließlich Dieselkraftstoff aus dem ersten Tank an den Kraftstoffzulauf der Einspritzpumpe förderbar ist und der Dieselkraftstoff und/ oder noch vorhandene Gemischreste aus dem Kraftstoffrücklauf der Einspritzpumpe, ausschließlich an den Kraftstoffeinlass des dritten Tanks förderbar sind.

Die Kraftstoffzuführungseinrichtung nach Anspruch 8, bei der es sich um eine der vorstehend beschriebenen Ktaftstoffzufühtungseinrichtungen handelt, ist zusätzlich gekennzeichnet durch
a) ein Mischventil mit einem Dieseleingang und einem Pflanzenöl und/oder -fett-Eingang und einem Gemischeingang und einem Kraftstoffausgang,
b) wobei der Kraftstoffauslass des ersten Tanks mit einem achten Ventil, insbesondere einem 3/2-Wege-Ventil, verbunden ist,
c) wobei das achte Ventil mit dem Dieseleingang des Mischventils und mit dem Kraftstoffzulauf der Einspritzpumpe, verbunden ist,
d) wobei in einer Mischungsstellung des Mischventils der Dieseleingang und der Pflanzenöl und/oder -fett-Eingang, jedoch nicht der Gemisch)-eingang mit dem Kraftstoffausgang strömungsmäßig verbunden sind,
e) wobei in einer Gemischstellung des Mischventils nur der Gemischeingang mit dem Kraftstoffauslass strömungsmäßig verbunden ist,
f) wobei der Klaftstoffauslass des zweiten Tanks mit dem Pflanzenöl und/oder -fett-Eingang des Mischventils verbunden ist,
g) wobei ein Kraftstoffeinlass des ersten Tanks und ein Kraftstoffeinlass des dritten Tanks mit einem siebten Ventil, insbesondere einem 3/2-Wege-Ventil, verbunden sind,
h) wobei das Mischventil mit dem Kraftstoffzulauf der Einspritzpumpe verbunden ist,
i) wobei der Kraftstoffrücklauf der Einspritzpumpe mit dem siebten. Ventil verbunden ist,
j) wobei in einem ersten Zustand des Kraftstoffleitungssystems das achte Ventil in eine erste Stellung und der Pflanzenöl und/oder -fett-Eingang sowie der Gemischeingang des Mischventils in eine geschlossene Stellung und das siebte Ventil in eine erste Stellung geschaltet sind, wobei ausschließlich Dieselkraftstoff aus dem ersten Tank an den Kraftstoffzulauf der Einspritzpumpe, förderbar ist und Dieselkraftstoff aus dem Kraftstoffrücklauf der Einspritzpumpe ausschließlich an den Kraftstoffeinlass des ersten Tanks förderbar ist,
k) wobei in einem zweiten Zustand des Kraftstoffleitungssystems das achte Ventil in eine zweite Stellung und das Mischventil in die Mischungsstellung und das siebte Ventil in eine zweite Stellung geschaltet ist, wobei Dieselkraftstoff aus dem ersten Tank und Pflanzenöl und/oder -fett aus dem zweiten Tank zum Mischventil förderbar sind und das Gemisch vom Mischventil an den Kraftstoffzulauf der Einspritzpumpe förderbar ist und das Gemisch aus dem Kraftstoffrücklauf der Einspritzpumpe ausschließlich an den Kraftstoffeinlass des dritten Tanks förderbar ist, und
l) wobei in einem dritten Zustand des Kraftstoffleitungssystems das achte Ventil in eine zweite Stellung und das Mischventil in die Gemischstellung und das siebte Ventil in die zweite Stellung geschaltet ist, wobei ausschließlich das Gemisch aus Dieselkraftstoff und Pflanzenöl und/oder -fett aus dem dritten Tank an den Kraftstoffzulauf der Einspritzpumpe förderbar ist und das Gemisch aus dem Kraftstoffrücklauf der Einspritzpumpe ausschließlich an den Kraftstoffeinlass des dritten Tanks förderbar ist.

Die Vorteil ergeben sich weitestgehend aus den bereits anhand der vorstehenden Ausführungsvarianten der Erfindung beschriebenen Vorteilen.

Von Vorteil ist ferner, wenn in einem vierten Zustand des Kraftstoffleitungssystems das achte Ventil in eine erste Stellung und der Pflanzenöls und/oder -fett-Eingang sowie der Gemischeingang des Mischventils in eine geschlossene Stellung und das siebte Ventil in die zweite Stellung geschaltet sind, wobei ausschließlich Dieselkraftstoff aus dem ersten Tank an den Kraftstoffzulauf der Einspritzpumpe förderbar ist und der Dieselkraftstoff und/oder noch vorhandene Gemischreste aus dem Kraftstoffrücklauf der Einspritzpumpe ausschließlich an den Kraftstoffeinlass des dritten Tanks förderbar sind.

Zweckmäßigerweise sind nach einer Weiterbildung zu den beiden vorgenannten Varianten der Erfindung in den zweiten Tank und/oder in die Verbindung zwischen zweitem Tank und Mischventil und/der in die Verbindung zwischen Mischventil und Einspritzpumpe eine oder mehrere Heizeinrichtungen zur Erwärmung des Kraftstoffs integriert, insbesondere elektrisch betriebene Heizeinrichtungen und/oder Wärmetauscher, die Wärme aus dem von der Einspritzpumpe, zurücklaufenden Kraftstoff an den zu der Einspritzpumpe hinlaufenden Kraftstoff übertragen. Die letztgenannte Variante ist besonders bevorzugt, da dabei die ohnehin vorhandene Wärme des zurücklaufenden Kraftstoffs ausgenutzt wird. Energiequellen außerhalb der Kraftstoffzuführungseinrichtung, beispielsweise Batterien oder Lichtmaschinen oder auch das vom Motor erwärmte Motorkühlwasser, müssen nicht angezapft werden.

Von Vorteil ist auch, in die Verbindung zwischen zweitem Tank und Mischventil mindestens einen Filter zu integrieren.

Besonders zweckmäßig und vorteilhaft ist bei allen vorbeschriebenen Ausführungsformen einer Kraftstoffzuführungseinrichtung, im dritten Tank einen Sensor zur Erfassung der Füllhöhe des dritten Tanks vorzusehen, insbesondere einen Schwimmsensor und/oder einen Schwimmschalter.

Bevorzugt ist die Kraftstoffzuführungseinrichtung gemäß der Erfindung ausgebildet und bestimmt zur Nachrüstung eines Dieselmotors. Dadurch kann eine große Zahl bereits vorhandener Dieselmotoren, insbesondere in Kraftfahrzeugen und Booten, für den dauerhaften und zuverlässigen Betrieb mit Pflanzenkraftstoff umgerüstet werden. Unter Betrieb mit Pflanzenkraftstoff wird hierbei jeder Betrieb verstanden, bei dem unter anderem auch Pflanzenkraftstoff zum Betreiben des Motors eingesetzt wird. Dabei ist es unschädlich, wenn in bestimmten Betriebsphasen ausschließlich Dieselkraftstoff eingesetzt wird oder wenn ein Gemisch aus Pflanzenkraftstoff und Dieselkraftstoff eingesetzt wird.

Nach Anspruch 10 wird ein Dieselmotor mit mindestens einer Einspritzpumpe angegeben, der eine vorstehend beschriebene Kraftstoffzuführungseinrichtung nach der Erfindung umfaßt.

Anspruch 11 schlägt ein Verfahren vor zum Betreiben einer Kraftstoffzuführungseinrichtung für einen Dieselmotor mit mindestens einer Einspritzpumpe, insbesondere einer der vorstehend beschriebenen Kraftstoffzuführungseinrichtungen,
a) wobei die Kraftstoffzuführungseinrichtung umfasst
   a1) mindestens einen ersten Tank für Dieselkraftstoff,
   a2) mindestens einen zweiten Tank für Pflanzenöl und/oder -fett, insbesondere Altpflanzenöl und/oder -fett,
   a3) mindestens einen dritten Tank zur Aufnahme eines Gemisches aus dem Dieselkraftstoff und dem Pflanzenöl und/oder -fett,
   a4) ein Kraftstoffleitungen und Kraftstoffventile umfassendes Kraftstoffleitungssystem zwischen den Tanks und der Einspritzpumpe, und
   a5) eine Steuereinheit zur Steuerung des Kraftstoffflusses durch das Kraftstoffleitungssystem,
b) bei dem beim Anlassen des Dieselmotors bis zum Erreichen der Betriebstemperatur des Dieselmotors, insbesondere etwa 80°C bis etwa 95°C, vorzugsweise etwa 87°C bis etwa 90°C, in einem ersten Betriebszustand der Kraftstoffzuführungseinrichtung Dieselkraftstoff aus dem ersten Tank zur Einspritzpumpe gefördert wird und Dieselkraftstoff von der Einspritzpumpe ausschließlich an den ersten Tank gefördert wird,
c) bei dem nach Erreichen der Betriebstemperatur des Dieselmotors in einem zweiten Betriebszustand der Kraftstoffzuführungseinrichtung Dieselkraftstoff aus dem ersten Tank und Pflanzenöl und/oder -fett aus einem zweiten Tank gemischt werden, insbesondere in einem Mischventil, und anschließend ausschließlich das Gemisch an die Einspritzpumpe gefördert wird und das Gemisch von der Einspritzpumpe an den dritten Tank gefördert wird, und zwar solange bis im dritten Tank eine vorgegebene oberen Füllhöhe erreicht oder überschritten ist,
d) bei dem nach Erreichen oder Überschreiten der vorgegebenen oberen Füllhöhe im dritten Tank bis zum Erreichen oder Unterschreiten einer vorgegebenen unteren Füllhöhe im dritten Tank in einem dritten Betriebszustand der Kraftstoffzufühfungseinrichtung ausschließlich das Gemisch aus Dieselkraftstoff und Pflanzenöl und/ oder -fett aus dem dritten Tank an die Einspritzpumpe gefördert wird und das Gemisch von der Einspritzpumpe ausschließlich an den dritten Tank gefördert wird,
e) bei dem nach erneutem Erreichen oder Unterschreiten der vorgegebenen unteren Füllhöhe bis zum Erreichen oder Überschreiten der vorgegebenen oberen Füllhöhe wiederum in dem zweiten Betriebszustand Dieselkraftstoff aus dem ersten Tank und Pflanzenöl und/oder -fett aus dem zweiten Tank gemischt wird, insbesondere in einem Mischventil, und anschließend das Gemisch an die Einspritzpumpe, gefördert wird und das Gemisch von der Einspritzpumpe ausschließlich an den dritten Tank gefördert wird,
f) bei dem anschließend die Kraftstoffzuführungseinrichtung weiter im Wechsel nach Schritt d) und nach Schritt e) betrieben wird, und zwar bis zum Einleiten einer Abstellphase des Dieselmotors oder bis zum Abstellen des Dieselmotors.

Die Vorteile des Verfahrens ergeben sich aus den vorstehend beschriebenen Vorteilen der Kraftstoffzuführungseinrichtung nach der Erfindung.

Gemäß einer Weiterbildung des Verfahrens ist vorgesehen, dass beim Einleiten einer Abstellphase des Dieselmotors in einem vierten Betriebszustand der Kraftstoffzuführungseinrichtung ausschließlich Dieselkraftstoff aus dem ersten Tank an die Einspritzpumpe gefördert wird und Dieselkraftstoff und/oder noch vorhandene Gemischreste von der Einspritzpumpe ausschließlich an den dritten Tank gefördert werden, und zwar für eine, insbesondere in Abhängigkeit vom durchzuspülenden Leitungsvolumen, vorgegebene Zeit. Ergänzend kann vorgesehen sein, dass nach Ablauf der vorgegebenen Zeit der Dieselmotor endgültig abgeschaltet wird oder bis zum endgültigen Abschalten des Dieselmotors im ersten Betriebszustand der Kraftstoffzuführungseinrichtung Dieselkraftstoff aus dem ersten Tank zur Einspritzpumpe gefördert wird und Dieselkraftstoff von der Einspritzpumpe ausschließlich an den ersten Tank gefördert wird.

Bevorzugt ist eine Verfahrenvariante, bei dem die Abstellphase des Dieselmotors automatisch, insbesondere bei Betätigung eines Abschalteinrichtung, eingeleitet wird oder manuell.

Eine zweckmäßige Weiterbildung sieht vor, Warnsignale, insbesondere optische und/oder akustische Warnsignale, auszugeben, solange die Abstellphase nicht abgeschlossen ist. Auch ist es möglich, vorzusehen, dass der Dieselmotor automatisch bis zum Abschluss der Abstellphase weiterläuft, das heißt in dieser Phase ist der Zündschalter (Ausschalter des Motors) überbrückt.

Eine zweckmäßige Variante, die insbesondere für Kraftfahrzeuge von Vorteil ist, sieht vor, das die Abstellphase nur in einer Park- oder Neutralstellung des Kraftfahrzeuggetriebes und/oder wenn kein (Automatik)gang eingelegt ist eingeleitet werden kann.

Besonders zweckmäßig und vorteilhaft ist eine Weiterbildung des Verfahrens, bei der die Füllhöhe im dritten Tank über einen Sensor, insbesondere einen Schwimmsensor und/oder ein Schwimmschalter, ermittelt wird,

Zweckmäßig ist ferner eine Variante, bei der das Pflanzenöl und/oder -fett im zweiten Tank und/oder nach dem Austritt aus dem zweiten Tank und/oder das Gemisch vor dem Eintritt in die Einspritzpumpe erwärmt wird, insbesondere auf etwa 60°C bis 70°C, insbesondere durch eine oder mehrere Heizeinrichtungen, vorzugsweise elektrisch betriebene Heizeinrichtungen und/oder Wätmetauscher, die Wärme aus dem von der Einsptitzpumpe zurücklaufenden Kraftstoff an den zu der Einspritzpumpe, hinlaufenden Kraftstoff übertragen.

Von Vorteil ist eine Weiterbildung des Verfahrens, bei der im zweiten Betriebszustand der Kraftstoffzuführungseinrichtung beim Mischen von Dieselkraftstoff und Pflanzenöl und/oder -fett, insbesondere in einem Mischventil, ein Gemisch erzeugt wird mit einem Mischungsverhältnis im Bereich von 7% Diesel und 93% Pflanzenöl und/oder -fett bis 93% Diesel und 7% Pflanzenöl und/oder -fett, insbesondere einem Mischungsverhältnis im Bereich von 15% Diesel und 85% Pflanzenöl und/oder -fett bis 20% Diesel und 80% Pflanzenöl- und/oder -fett, vorzugsweise von etwa 18% Diesel und 82% Pflanzenöl und/oder -fett.

Die Erfindung wird nachstehend auch hinsichtlich weiterer Merkmale und Vorteile anhand der Beschreibung eines Ausführungsbeispiels und unter Bezugnahme auf die beiliegende Zeichnung näher erläutert. Dabei zeigen
- FIG 1: ein Ausführungsbeispiel einer erfindungsgemäßen Kraftstoffzu- führungseinrichtung für einen Dieselmotor mit Einspritzpumpe,
- FIG 2: ein alternatives Ausführungsbeispiel einer erfindungsgemäßen Kraftstoffzuführungseinrichtung für einen Dieselmotor mit Ein- spritzpumpe,
- FIG 3: ein weiteres alternatives Ausführungsbeispiel,
- FIG 4: ein weiteres nochmals alternatives Ausführungsbeispiel, und
- FIG 5: ein weiteres, zu den vorstehenden Beispielen alternatives Ausfüh- rungsbeispiel.

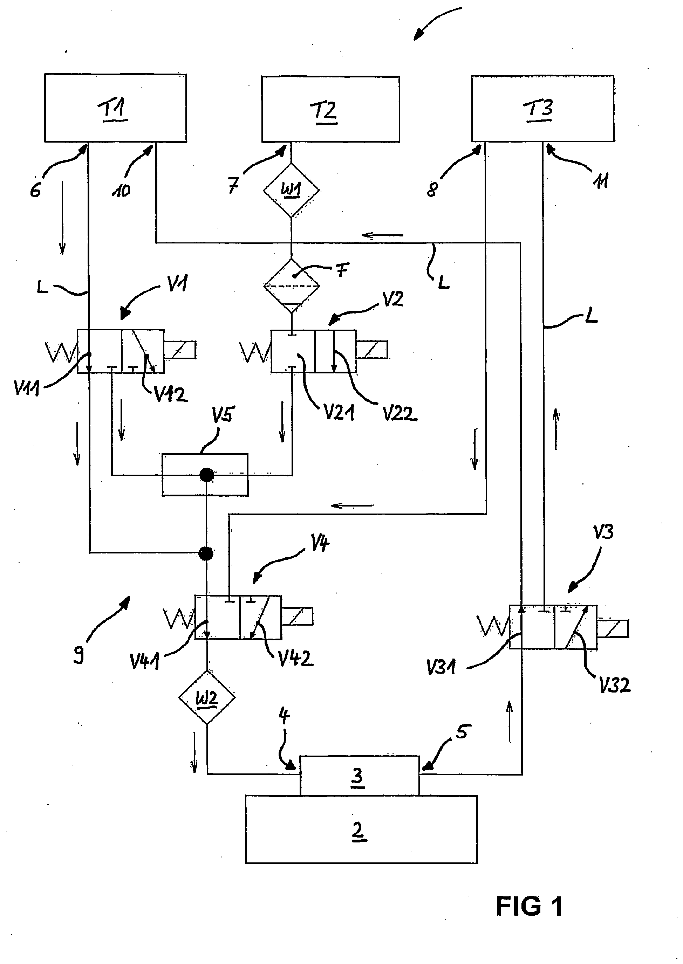

Vergleichbare Teile und Komponenten sind in den verschiedenen Ausführungsbeispielen nach FIG 1 bis FIG 5 mit den gleichen Bezugszeichen versehen.

FIG 1 zeigt ein Ausführungsbeispiel einer erfindungsgemäßen Kraftstoffzuführungseinrichtung 1 für einen Dieselmotor 2 mit Einspritzpumpe 3. Die Einspritzpumpe (auch Einspritzanlage) versorgt eine Einspritzdüse (nicht dargestellt) mit Kraftstoff. Die Einspritzpumpe weist einen Kraftstoffzulauf 4 und einen hraftstoffrücklauf 5 auf.

Die Kraftstoffzuführungseinrichtung 1 umfasst einen ersten Tank T1 für Dieselkraftstoff, einen zweiten Tank T2 für Pflanzenöl und/oder -fett, insbesondere Altpflanzenöl und/oder -fett, und einen dritten Tank T3 zur Aufnahme eines Gemisches aus dem Dieselkraftstoff und dem Pflanzenöl und/oder -fett. Der erste Tank T1 weist einen Kraftstoffauslass 6 und einen Kraftstoffeinlass 10 auf. Der zweite Tank T2 weist einen Kraftstoffauslass 7 auf. Der dritte Tank T3 weist einen Kraftstoffauslass 8 und einen Kraftstoffeinlass 11 auf.

Zeckmäßigerweise sollte das Pflanzenöl bzw. Pflanzenfett, insbesondere das Altpflanzenöl bzw. -fett, vor dem Einfüllen in den zweiten Tank T2 gereinigt werden, um Essensreste und sonstige Verunreinigungen, wie sie beispielsweise bei Frittierölen und -fetten nach ihrer Verwendung auftreten, zu entfernen. Geeignet sind hierfür beispielsweise Mehrzweckfilter, vorzugsweise Maschenfilter mit einer 10 µm-Masche. Diese Filter sind auswaschbar und haben somit eine lange Lebensdauer.

Die Kraftstofftanks T1, T2 und T3 sind über ein Kraftstoffleitungssystem 9 mit der Einspritzpumpe 3 verbunden, wobei die Kraftstoffauslässe 6, 7, 8 aller Tanks T1, T2, T3 mit dem Kraftstoffzulauf 4 der Einspritzpumpe 3 verbunden sind und der Kraftstoffrücklauf 5 der Einspritzpumpe 3 mit dem Kraftstoffeinlass 10 des ersten Tanks T1 und dem Kraftstoffeinlass 11 des dritten Tanks T3 verbunden ist.

Das Kraftstoffleitungssystem 9 umfasst mehrere Ventile V1 V2, V3, V4, V5 und Kraftstoffleitungen L, wobei die vorgesehenen Kraftstoffflussrichtungen durch Pfeile an den Kraftstoffleitungen angegeben sind. Aufgabe des Kraftstoffleitungssystems 9 ist, der Einspritzpumpe 3 über den Kraftstoffzulauf 4 den jeweils erforderlichen bzw. gewünschten Kraftstoff aus den Tanks T1, T2, T3 zuzuführen und den überschüssigen Kraftstoff aus der Einspritzpumpe 3 über den Kraftstoffrücklauf 5 an den jeweils vorgesehenen Tank T1, T2, T3 zurückzuführen.

Zur Steuerung des Kraftstoffleitungssystems 9 ist eine Steuereinheit (nicht dargestellt) vorgesehen, über die unter anderem die Ventile V1, V2, V3, V4, V5 gesteuert werden. Ferner ist im dritten Tank T3 ein Schwimmer (auch: Schwimmschalter, nicht dargestellt) vorgesehen, der die Füllung des dritten Tanks erfasst und der der Steuereinheit das Erreichen (oder Unter- bzw. Überschreiten) einer unteren bzw. oberen vorgegebenen Position im dritten Tank T3 signalisiert; das heißt eine minimale bzw. maximale vorgegebene Füllung des dritten Tanks T3.

Zum Verständnis der nachfolgenden Ausführungen sei angemerkt, dass unter einem x/y-Wege-Ventil ein Ventil mit x Anschlüssen und y Schaltstellungen zu verstehen ist.

Im einzelnen ist das Kraftstoffleitungssystem folgendermaßen aufgebaut:
Der Kraftstoffauslass 6 des ersten Tanks T1 ist über eine Kraftstoffleitung L mit einem ersten Ventil V1, einem 3/2-Wege-Ventil, verbunden. Der Kraftstoffauslass 7 des zweiten Tanks T2 mit einem zweiten Ventil V2, einem 2/2-Wege-Ventil, verbunden. In diese Verbindung ist eine erste Heizeinrichtung W1 und ein Filter F integriert, vorzugsweise ein Ölfilter mit Wasserabscheidung und Entlüftung.

Bei dem Filter F handelt es sich um einen üblichen Ölfilter. Dem Filter F kommt insbesondere eine Entwässerungs- und Entlüftungsfunktion zu.

Die erste Heizeinrichtung W1 (auch Wärmetauscher) hat die Aufgabe, das Pflanzenöl bzw. Pflanzenfett nach dem Austritt aus dem zweiten Tank T2 zu erwärmen, vorzugsweise auf etwa 60°C bis 70°C. Zweckmäßigerweise wird eine elektrisch betriebene Heizeinrichtung W1 verwendet.

Der Kraftstoffeinlass 10 des ersten Tanks T1 und der Kraftstoffeinlass 11 des dritten Tanks T3 sind mit einem dritten Ventil V3, insbesondere einem 3/2-Wege-Ventil, verbunden. Das erste Ventil V1 ist mit einem vierten Ventil V4, insbesondere einem 3/2-Wege-Ventil, verbunden. Das erste Ventil V1 und das zweite Ventil V2 sind mit einem Mischventil V5 verbunden.

Das Mischventil V5 hat die Aufgabe, Dieselkraftstoff aus dem ersten T1 und Pflanzenöl- und/oder -fett aus dem zweiten Tank T2 in einem vorgegebenen, insbesondere einstellbarem Verhältnis zu mischen. Die Steuerung des Mischventils kann elektrisch und/oder elektronisch und/oder mechanisch erfolgen. Das Gemisch wird anschließend an die Einspritzpumpe weiterbefördert. Ein bevorzugtes Mischverhältnis des erzeugten Gemisches ist 18% Dieselkraftstoff und 82% Pflanzenöl bzw. -fett.

Das Mischventil V5 ist mit dem vierten Ventil V4 verbunden. Der Kraftstoffauslass 8 des dritten Tanks T3 ist mit dem vierten Ventil V4 verbunden. Das vierte Ventil V4 ist mit dem Kraftstoffzulauf 4 der Einspritzpumpe 3 verbunden. In dieser Verbindung ist eine zweite Heizeinrichtung W2 (auch Wärmetauscher) integriert. Diese zweite Heizeinrichtung hat die Aufgabe, das Gemisch aus Dieseltreibstoff und Pflanzenöl bzw. Pflanzenfett vor dem Eintritt in die Einspritzpumpe 3 zu erwärmen, vorzugsweise auf etwa 60°C bis 70°C. Zweckmäßigerweise wird auch hier eine elektrisch betriebene Heizeinrichtung W2 verwendet. Der Kraftstoffrücklauf 5 der Einspritzpumpe 3 ist mit dem dritten Ventil V3 verbunden.

Über die Steuereinheit werden vier verschiedene Zustände des Kraftstoffleitungssystems 9 geregelt. Diese vier Zustände sind nachfolgend beschrieben:

### Erster Zustand:

| | |
|---|---|
| Erstes Ventil V1: | erste Stellung V11 |
| Zweites Ventil V2: | geschlossene Stellung V21 |
| Drittes Ventil V3: | erste Stellung V31 |
| Viertes Ventil V4: | erste Stellung V41 |

Im ersten Zustand des Kraftstoffleitungssystems (bzw. ersten Betriebszustand der Kraftstoffzuführungseinrichtung) ist ausschließlich Dieselkraftstoff aus dem ersten Tank T1 an den Kraftstoffzulauf 4 der Einspritzpumpe 3 förderbar und Dieselkraftstoff aus dem Kraftstoffrücklauf 5 der Einspritzpumpe 3 ausschließlich an den Kraftstoffeinlass 10 des ersten Tanks T1 förderbar.

Im einzelnen fließt im ersten Zustand Dieselkraftstoff aus dem ersten Tank T1 (Dieseltank) zum ersten Ventil V1, das sich in der ersten Stellung V11 befindet. Der Dieselkraftstoff wird somit zum vierten Ventil V4 weitergeleitet. Dieses befindet sich in der Stellung V41 und leitet den Kraftstoff somit weiter zur Heizeinrichtung W2. Dort wird der Kraftstoff auf etwa 60°C bis 70°C erwärmt und weiter an den Kraftstoffzulauf 4 der Einspritzpumpe 3 befördert. Der überschüssige Kraftstoff fließt vom Kraftstoffrücklauf 5 der Einspritzpumpe 3 über das in erste Stellung V31 geschaltete Ventil V3 zurück in den ersten Tank T1 (Dieseltank).

### Zweiter Zustand:

| | |
|---|---|
| Erstes Ventil V1: | zweite Stellung V12 |
| Zweites Ventil V2: | offene Stellung V22 |
| Drittes Ventil V3: | zweite Stellung V32 |
| Viertes Ventil V4: | erste Stellung V41 |

Im zweiten Zustand des Kraftstoffleitungssystems (bzw. zweiten Betriebszustand der Kraftstoffzuführungseinrichtung) ist Dieselkraftstoff aus dem ersten Tank T1 (Dieseltank) und Pflanzenöl und/oder -fett aus dem zweiten Tank T2 (Pflanzenöl/-fett-Tank) zum Mischventil V5 förderbar. Von dort aus ist das erzeugte Kraftstoffgemisch zur Einspritzpumpe 3 förderbar. Das Gemisch ist schließlich vom Kraftstoffrücklauf 5 der Einspritzpumpe 3 ausschließlich an den Kraftstoffeinlass 11 des dritten Tanks T3 förderbar.

Im einzelnen fließt im zweiten Zustand Dieselkraftstoff aus dem ersten Tank T1 zum ersten Ventil V1, das sich in der zweiten Stellung V12 befindet. Das erste Ventil V1 leitet den Dieselkraftstoff zum Mischventil V5 weiter. Gleichzeitig fließt Pflanzenöl bzw. Pflanzenfett aus dem zweiten Tank T2 durch die Heizeinrichtung W1 (elektrischer Wärmetauscher), worin der Kraftstoff auf etwa 60°C bis 70°C erwärmt wird, zum Filter F. Vom Filter F fließt der nunmehr gefilterte Kraftstoff durch das zweite Ventil V2, das in eine offene Stellung V22 geschaltet ist, zum Mischventil V5.

Das Mischventil V5 stellt ein Kraftstoffgemisch aus dem Dieselkraftstoff und dem Pflanzenöl bzw. Pflanzenfett her, und zwar ein Kraftstoffgemisch mit einem vorgegebenen oder vorgebbaren prozentualen Mischverhältnis der beiden Kraftstoffarten. Das Mischventil V5 kann dabei derart ausgebildet sein, dass das vorgegebene oder vorgebbare Mischverhältnis einstellbar (auch: variabel) ist.

Das erzeugte Gemisch wird vom Mischventil V5 an das vierte Ventil V4 weitergeleitet, das in die erste Stellung V41 geschaltet ist. Von dort gelangt das Gemisch weiter zur Heizeinrichtung W2, wird dort auf etwa 60°C bis 70°C erwärmt und weiter an den Kraftstoffzulauf 4 der Einspritzpumpe 3 befördert. Der überschüssige Kraftstoff (das Gemisch) fließt vom Kraftstoffrücklauf 5 der Einspritzpumpe 3 über das in zweite Stellung V32 geschaltete Ventil V3 in den dritten Tank T3 (Gemischtank) und füllt diesen.

Die Aufgabe des dritten Tanks T3 (Gemischtanks) liegt darin, das überschüssige Kraftstoffgemisch zunächst zu speichern und es später (dritter Zustand, siehe unten) dem Dieselmotor erneut zur Verfügung zu stellen.

Der dritte Tank T3 (Gemischtank) ist mit einem Schwimmschalter (nichtdargestellt) zur Füllstandskontrolle (auch: Kraftstoffvolumen-Kontrolle) ausgestattet.

### Dritter Zustand:

| | |
|---|---|
| Erstes Ventil V1: | erste Stellung V11 oder zweite Stellung V12 |
| Zweites Ventil V2: | geschlossene Stellung V21 |
| Drittes Ventil V3: | zweite Stellung V32 |
| Viertes Ventil V4: | zweite Stellung V42 |

Im dritten Zustand des Kraftstoffleitungssystems (bzw. dritten Betriebszustand der Kraftstoffzuführungseinrichtung) ist ausschließlich das Gemisch aus Dieselkraftstoff und Pflanzenöl und/oder -fett aus dem dritten Tank T3 an den Kraftstoffzulauf 4 der Einspritzpumpe 3 förderbar und das überschüssige Gemisch aus dem Kraftstoffrücklauf 5 der Einspritzpumpe 3 ausschließlich an den Kraftstoffeinlass 11 des dritten Tanks T3 förderbar.

Im einzelnen befindet sind das erste Ventil V1 in einer beliebigen Stellung, das zweite Ventil V2 ist bevorzugt in eine geschlossene Stellung V21 geschaltet, um einen ungewollten Kraftstofffluss zwischen erstem Tank T1 und zweitem Tank T2 zu verhindern. Das Gemisch aus dem dritten Tank T3 fließt zum vierten Ventil V4, das in die zweite Stellung V42 geschaltet ist. Von dort gelangt das Gemisch weiter zur Heizeinrichtung W2, wird dort auf etwa 60°C bis 70°C erwärmt und weiter an den Kraftstoffzulauf 4 der Einspritzpumpe 3 befördert. Der überschüssige Kraftstoff (das Gemisch) fließt vom Kraftstoffrücklauf 5 der Einspritzpumpe 3 über das in zweite Stellung V32 geschaltete Ventil V3 in den dritten Tank T3 (Gemischtank).

### Vierter Zustand:

| | |
|---|---|
| Erstes Ventil V1: | erste Stellung V11 |
| Zweites Ventil V2: | geschlossene Stellung V21 |
| Drittes Ventil V3: | zweite Stellung V32 |
| Viertes Ventil V4: | erste Stellung V41 |

Im vierten Zustand des Kraftstoffleitungssystems (bzw. vierten Betriebszustand der Kraftstoffzuführungseinrichtung) ist ausschließlich Dieselkraftstoff aus dem ersten Tank T1 an den Kraftstoffzulauf 4 der Einspritzpumpe 3 förderbar und der überschüssige Dieselkraftstoff und/oder noch vorhandene Gemischreste aus dem Kraftstoffrücklauf 5 der Einspritzpumpe 3 sind ausschließlich an den Kraftstoffeinlass 11 des dritten Tanks T3 förderbar.

Hierfür steht im dritten Tank T3 immer ein ausreichendes Restvolumen zur Verfügung.

Im einzelnen fließt Dieselkraftstoff aus dem ersten Tank T1 (Dieseltank) zum ersten Ventil V1, das in die erste Stellung V11 geschaltet ist. Von dort wird der Kraftstoff an das vierte Ventil V4 weitergeleitet, das in die erste Stellung V41 geschaltet ist. Von dort gelangt das Gemisch weiter zur Heizeinrichtung W2, wird dort auf etwa 60°C bis 70°C erwärmt und weiter an den Kräftstoffzulauf 4 der Einspritzpumpe 3 befördert. Der überschüssige Kraftstoff (Dieselkraftstoff und/oder noch vorhandenes Gemisch) fließt vom Kraftstoffrücklauf 5 der Einspritzpumpe 3 über das in zweite Stellung V32 geschaltete Ventil V3 in den dritten Tank T3 (Gemischtank).

Die vorstehend beschriebenen Zustände werden folgendermaßen aufeinanderfolgend gesteuert:
Beim Starten des Dieselmotors befindet sich die Kraftstoffzuführungseinrichtung in dem ersten Betriebszustand (erster Zustand des Kraftstoffleitungssystems), das heißt der Dieselmotor läuft im reinen Dieselbetrieb.

Bei Erreichen der Betriebstemperatur des Motors wird die Kraftstoffzuführungseinrichtung in den zweiten Betriebszustand (zweiter Zustand des Kraftstoffleitungssystems) geschaltet, das heißt der Dieselmotor läuft in einem ersten Gemischbetrieb und der dritte Tank T3 (Gemischtank) wird gefüllt.

Sobald der Schwimmer im dritten Tank T3 (Gemischttank) seine obere vorgegebene Position erreicht hat, wird die Kraftstoffzuführungseinrichtung in den dritten Betriebszustand (dritter Zustand des Kraftstoffleitungssystems) geschaltet, das heißt der Dieselmotor läuft weiterhin in einem Gemischbetrieb, nämlich einem zweiten Gemischbetrieb, in dem der dritte Tank T3 (Gemischtank) entleert wird.

Sobald der Schwimmer im dritten Tank T3 (Gemischttank) seine untere vorgegebene Position erreicht hat (das heißt die Kraftstoffmenge im dritten Tank T3 ist auf ein niedriges Niveau gefallen), wird die Kraftstoffzuführungseinrichtung wieder in den zweiten Betriebszustand (zweiter Zustand des Kraftstoffleitungssystems) geschaltet, das heißt der Dieselmotor läuft wieder im ersten Gemischbetrieb und der dritte Tank T3 (Gemischtank) wird wieder gefüllt.

Ist der dritte Tank bei Erreichen der Betriebstemperatur des Motors im ersten Betriebszustand bereits bis zur oder über die obere vorgegebene Position gefüllt, so wird die Kraftstoffzuführungseinrichtung gleich in den dritten Betriebszustand (dritter Zustand des Kraftstoffleitungssystems) geschaltet und der vorbeschriebene Wechsel zwischen drittem und zweitem Zustand findet anschließend beim Erreichen der unteren vorgegebenen Position statt. Dies ist auch möglich, wenn der dritte Tank bei Erreichen der Betriebstemperatur des Motors zwar noch nicht bis zur oberen vorgegebenen Position gefüllt ist, der Füllstand jedoch über die untere vorgegebene Position hinaus geht.

Der fortwährende Wechsel zwischen zweitem und drittem Betriebszustand bzw. zwischen erstem und zweitem Gemischbetrieb ermöglicht einen Dauerbetrieb des Dieselmotors mit einem Gemisch aus Dieselkraftstoff und Pflanzenöl bzw. Pflanzenfett, wobei das Mischverhältnis zur optimalen Anpassung an den jeweiligen Dieselmotor einstellbar ist (durch entsprechende Einstellung des Mischventils V5).

Wird nun der Zündschlüssel (allgemein: Zündungsschalter, Ein-Aus-Schalter, Ausschalter) des Dieselmotors auf "Aus" gestellt, kann vorgesehen sein, dass die Steuerelektronik die Motorsteuerung übernimmt. Der Dieselmotor wird dabei nicht sofort ausgeschaltet, vielmehr wird vom gerade eingestellten zweiten oder dritten Betriebszustand der Kraftstoffzuführungseinrichtung in den vierten Betriebszustand geschaltet (vierter Zustand des Kraftstoffleitungssystems).

Der vierte Betriebszustand, der auch als Zeitverzögerungsphase bezeichnet werden kann, ist dazu bestimmt, das in den Leitungen und der Einspritzpumpe noch vorhandene Gemisch auszufördern. Da es nicht in den ersten Tank T1 (Dieseltank) gelangen soll, wird es in den dritten Tank T3 (Gemischtank) gefördert. Im vierten Zustand erfolgt somit ein Durchspülen des Kraftstoffleitungssystems 9 und der Einspritzpumpe 3. Dadurch soll die Kraftstoffzuführungseinrichtung 1 vor dem vollständigen Abschalten des Dieselmotors in einen reinen Diesel-Zustand versetzt werden, um ein problemloses Einschalten des Dieselmotors im kalten Zustand zu ermöglichen.

Abhängig von den Längen der Leitungen wird der vierte Zustand für eine entsprechend angepasste Zeitdauer betrieben. Diese ist variabel einstellbar, insbesondere elektrisch und/oder elektronisch und/oder manuell. Eine typische Zeitdauer liegt bei etwa 10 Sekunden bis 120 Sekunden.

Nach Ablauf der Zeitdauer kann der Dieselmotor manuell oder automatisch endgültig ausgeschaltet werden. Es ist aber auch möglich, für eine bestimmte Zeit vorzugsweise automatisch in den ersten Betriebszustand der Kraftstoffzuführungseinrichtung (erster Zustand des Kraftstoffleitungssystems) zu schalten und dadurch den Dieselmotor im "normalen" reinen Dieselbetrieb zu betreiben. Nach etwa zwei bis drei Minuten wird der Dieselmotor dann automatisch endgültig abgestellt.

Bei den Ventilen V1, V2, V3, V4 handelt es sich beispielsweise um handelsübliche Magnetventile. Die Steuerung der Ventile kann elektrisch und/oder elektronisch und/oder mechanisch erfolgen.

Die Einstellung des jeweiligen Betriebszustands der Kraftstoffzuführungseinrichtung bzw. des jeweiligen Zustands des Kraftstoffleitungssystems erfolgt durch entsprechende Einstellung der Ventile V1, V2, V3, V4, beispielsweise durch die Steuereinheit. Die Einstellung eines Betriebszustandes bzw. das Umschalten zwischen den Betriebszuständen erfolgt in Abhängigkeit von der Zündschlüsselposition (Schaltstellung des Zündungsschalters, Ein-Aus-Schalters) und/oder der Temperatur des Dieselmotors (mittels eines üblichen Thermosensors) und/oder der Kraftstofffüllung des dritten Tanks T3 (Gemischtank).

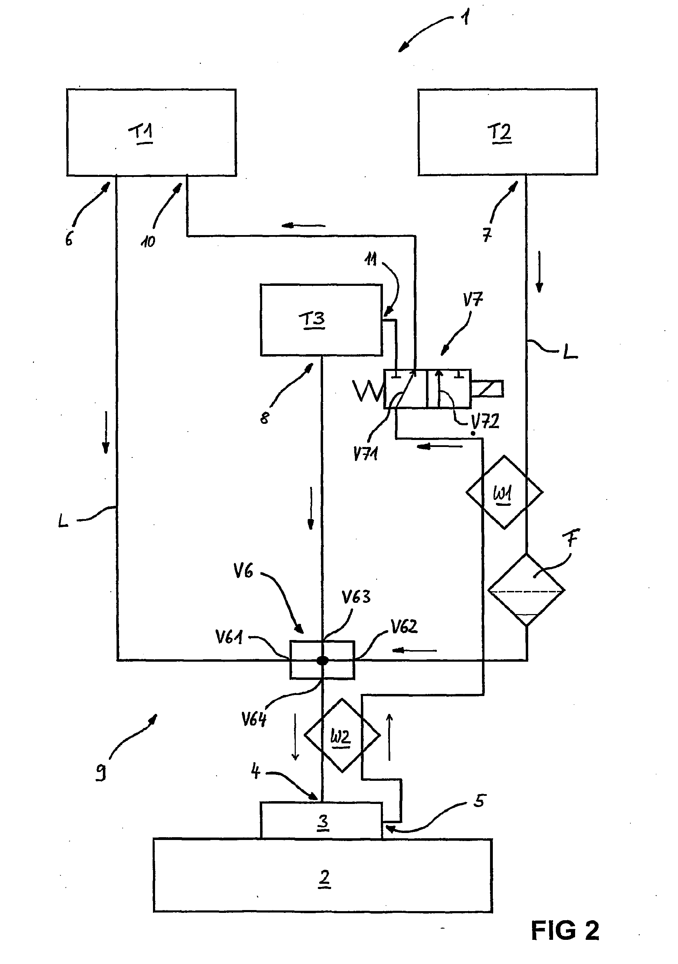

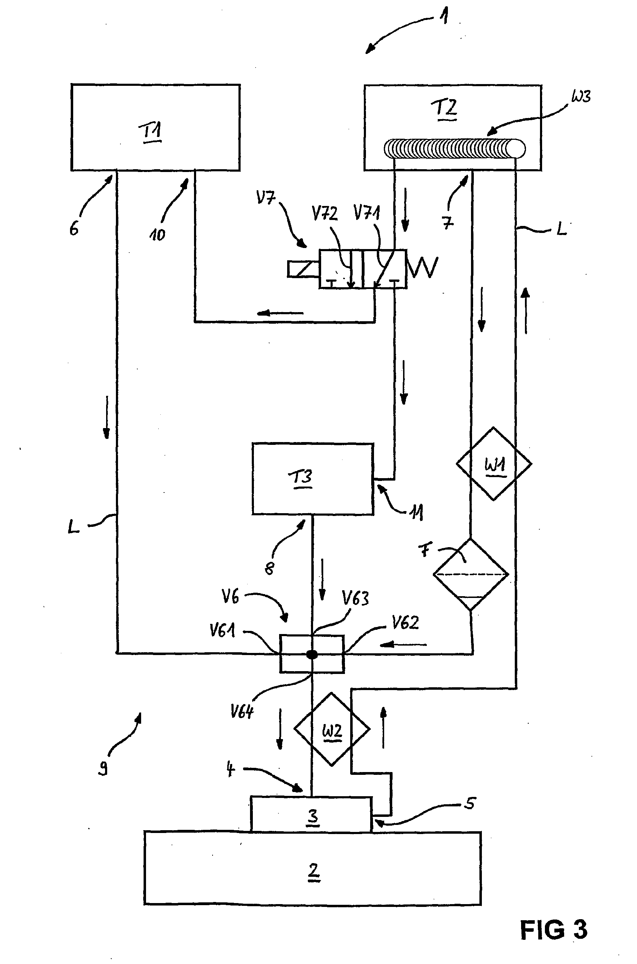

FIG 2 und FIG 3 zeigen zwei weitere, alternative Ausführungsbeispiele einer erfindungsgemäßen Kraftstoffzuführungseinrichtung 1 für einen Dieselmotor 2 mit Einspritzpumpe 3 (auch: Einspritzanlage). Die Ausführungsvariante nach FIG 2 ist insbesondere für eine Verwendung in Regionen mit üblicherweise ganzjährig milden bzw. warmen Umgebungstemperaturen bestimmt, beispielsweise in Europa in Ländern südlich der Alpen. Die Ausführungsvariante nach FIG 3 hingegen ist für Regionen bestimmt, in denen zumindest zeitweise (beispielsweise in den Wintermonaten) auch verhältnismäßig niedrige Umgebungstemperaturen auftreten, beispielsweise in Ländern nördlich der Alpen oder in den Alpen selbst. Der Unterschied zwischen den beiden Varianten liegt - wie untenstehend näher erläutert wird - insbesondere im Vorsehen einer zusätzlichen Heizeinrichtung W3 im zweiten Tank T2 für Pflanzenöl bzw. Pflanzenfett.

Wie beim Ausführungsbeispiel nach FIG 1 versorgt auch in den Beispielen nach FIG 2 und FIG 3 jeweils die Einspritzpumpe (bzw. Einspritzanlage) eine Einspritzdüse (nicht dargestellt) mit Kraftstoff. Die Einspritzpumpe 3 weist einen Kraftstoffzulauf 4 und einen Kraftstoffrücklauf 5 auf.

Die Kraftstoffzuführungseinrichtung 1 umfasst, sowohl in FIG 2 als auch in FIG 3 einen ersten Tank T1 für Dieselkraftstoff, einen zweiten Tank T2 für Pflanzenöl und/oder -fett, insbesondere Altpflanzenöl und/oder -fett, und einen dritten Tank T3 zur Aufnahme eines Gemisches aus dem Dieselkraftstoff und dem Pflanzenöl und/oder -fett. Der erste Tank T1 weist einen Kraftstoffauslass 6 und einen Kraftstoffeinlass 10 auf. Der zweite Tank T2 weist einen Kraftstoffauslass 7 auf. Der dritte Tank T3 weist einen Kraftstoffauslass 8 und einen Kraftstoffeinlass 11 auf.

Die Kraftstofftanks T1, T2 und T3 sind über ein Kraftstoffleitungssystem 9 mit der Einspritzpumpe 3 verbunden, wobei die Kraftstoffauslässe 6, 7, 8 aller Tanks T1, T2, T3 mit dem Kraftstoffzulauf 4 der Einspritzpumpe 3 verbunden bzw. verbindbar sind und der Kraftstoffrücklauf 5 der Einspritzpumpe 3 mit dem Kraftstoffeinlass 10 des ersten Tanks T1 und dem Kraftstoffeinlass 11 des dritten Tanks T3 verbunden bzw. verbindbar ist.

Das Kraftstoffleitungssystem 9 umfasst wiederum Kraftstoffleitungen L, im Unterschied zum Ausführungsbeispiel nach FIG 1 sind jedoch in FIG 2 und FIG 3 jeweils nur zwei Ventile V6, V7 vorgesehen. Die vorgesehenen Kraftstoffflussrichtungen sind durch Pfeile an den Kraftstoffleitungen angegeben.

Aufgabe des Kraftstoffleitungssystems 9 ist, der Einspritzpumpe 3 über den Kraftstoffzulauf 4 den jeweils erforderlichen bzw. gewünschten Kraftstoff aus den Tanks T1, T2, T3 zuzuführen und den überschüssigen Kraftstoff aus der Einspritzpumpe 3 über den Kraftstoffrücklauf 5 an den jeweils vorgesehenen Tank T1, T2, T3 zurückzuführen.

Zur Steuerung des Kraftstoffleitungssystems 9 ist wiederum eine Steuereinheit (nicht dargestellt) vorgesehen, über die unter anderem die Ventile V6 und V7 gesteuert werden. Ferner ist im dritten Tank T3 wiederum ein Schwimmer (auch: Schwimmschalter, nicht dargestellt) vorgesehen, der die Füllung des dritten Tanks erfasst und der der Steuereinheit das Erreichen (oder Unter- bzw. Überschreiten) einer unteren bzw. oberen vorgegebenen Position im dritten Tank T3 signalisiert, das heißt eine minimale bzw. maximale vorgegebene Füllung des dritten Tanks T3.

Im einzelnen ist das Kraftstoffleitungssystem in den Ausführungsbeispielen nach FIG 2 und FIG 3 folgendermaßen aufgebaut:
Der Kraftstoffauslass 6 des ersten Tanks T1 ist über eine Kraftstoffleitung L mit einem Mischventil V6 verbunden, und zwar mit dessen Dieseleingang V61.

Der Kraftstoffauslass 7 des zweiten Tanks T2 ist ebenfalls mit dem Mischventil V6 verbunden, und zwar mit dessen Pflanzenöl- bzw. -fetteingang V62. In diese Verbindung ist eine erste Heizeinrichtung W1 und ein Filter F integriert, wobei es sich vorzugsweise wie beim Beispiels nach FIG 1 um einen üblichen Ölfilter mit Wasserabscheidung und Entlüftung handelt.

Die erste Heizeinrichtung W1 hat wie im Ausführungsbeispiel nach FIG 1 auch in FIG 2 und FIG 3 die Aufgabe, das Pflanzenöl bzw. Pflanzenfett nach dem Austritt aus dem zweiten Tank T2 zu erwärmen, vorzugsweise auf etwa 60°C bis 70°C. Bei der ersten Heizeinrichtung W1 in FIG 2 und FIG 3 handelt es sich hierbei um einen Wärmetauscher W1, der dem aus dem Kraftstoffrücklauf 5 der Einspritzpumpe 3 austretenden, erwärmten Kraftstoff Wärme entzieht und diese zur Erwärmung des Pflanzenöls bzw. Pflanzenfetts einsetzt. Dies wird untenstehend weiter erläutert.

Auch der Kraftstoffauslass 8 des dritten Tanks T3 ist mit dem Mischventil V6 verbunden, und zwar mit dessen Gemischeingang V63.

Der Ausgang V64 des Mischventils V6 ist mit dem Kraftstoffzulauf 4 der Einspritzpumpe 3 verbunden. In dieser Verbindung ist eine zweite Heizeinrichtung W2 integriert. Diese zweite Heizeinrichtung W2 hat wie im Beispiel nach FIG 1 auch in FIG 2 und FIG 3 die Aufgabe, den Kraftstoff vor dem Eintritt in die Einspritzpumpe 3 zu erwärmen, vorzugsweise auf etwa 60°C bis 70°C.

Bei der zweiten Heizeinrichtung W2 in FIG 2 und FIG 3 handelt es sich hierbei um einen Wärmetauscher W2, der - wie der Wärmetauscher W1 - dem aus dem Kraftstoffrücklauf 5 der Einspritzpumpe 3 austretenden, erwärmten Kraftstoff Wärme entzieht und diese zur Erwärmung des Kraftstoffs vor dem Eintritt in die Einspritzpumpe 3 einsetzt. Dies wird untenstehend weiter erläutert.

Das Mischventil V6 weist somit drei Eingänge V61, V62, V63 und einen Ausgang V64 auf, wobei die Eingänge V61, V62, V63 je nach Einstellung des Mischventils V6 in unterschiedlichen Kombinationen, wie nachfolgend erläutert, mit dem Ausgang V64 verbindbar sind.

In einer Dieselstellung des Mischventils V6 ist nur der Dieseleingang V61 mit dem Ausgang V64 strömungsmäßig verbunden, der Pflanzenöl- bzw. -fetteingang V62 und der Gemischeingang V63 sind verschlossen. Dies bedeutet, dass in der Dieselstellung nur Dieselkraftstoff aus dem ersten Tank T1 über das Mischventil V6 an die Einspritzpumpe 3 gelangt.

In einer Mischungsstellung des Mischventils V6 sind sowohl der Dieseleingang V61 als auch der Pflanzenöl- bzw. -fetteingang V62 mit dem Ausgang V64 strömungsmäßig verbunden, der Gemischeingang V63 ist verschlossen. Dies bedeutet, dass in der Mischungsstellung Dieselkraftstoff aus dem ersten T1 und Pflanzenöl- und/oder -fett aus dem zweiten Tank T2 im Mischventil V6 gemischt wird und über den Ausgang V64 an die Einspritzpumpe 3 gelangt. Das gewünschte Mischungsverhältnis lässt sich hierbei am Mischventil einstellen bzw. ist durch das Mischventil vorgegeben, beispielsweise durch den Öffnungsquerschnitt an den Eingängen V61, V62. Ein bevorzugtes Mischverhältnis des im Mischventil V6 erzeugten Gemisches ist auch hier 18% Dieselkraftstoff und 82% Pflanzenöl bzw. -fett.

In einer Gemischstellung des Mischventils V6 ist der Gemischeingang V63 strömungsmäßig mit dem Ausgang V64 verbunden, der Dieseleingang V61 und der Pflanzenöl- bzw. -fetteingang V62 sind verschlossen. Dies bedeutet, dass in der Gemischstellung nur Kraftstoffgemisch aus dem dritten Tank T3 über das Mischventil V6 an die Einspritzpumpe 3 gelangt.

Bei dem Mischventil V6 kann es sich um bekannte, handelsübliche Mischventile handeln. Die Steuerung des Mischventils V6 kann elektrisch und/oder elektronisch und/oder mechanisch erfolgen. Als Beispiel sei ein Kugelhahnmischventil mit drei Eingängen (auch: Zuläufe, Einlässe) und einem Ausgang (auch: Ablauf, Auslass) genannt.

In dem Mischventil V6 liegt einer der wesentlichen Unterschiede des Ausführungsbeispiels gemäß FIG 2 und FIG 3 zum Ausführungsbeispiel nach FIG 1. Das Mischventil V6 in FIG 2 und FIG 3 umfasst die Funktionen des Mischventils V5 und des ersten Ventils V1, des zweiten Ventils V2 und des vierten Ventils V4 in FIG 1. Seine Aufgabe ist somit nicht nur die Erzeugung des gewünschten Gemisches aus den sortenreinen Ausgangskraftstoffen, sondern auch die gezielte Zuleitung der sortenreinen Ausgangskraftstoffe sowie des Kraftstoffgemisches an die Einspritzpumpe 3.

Der Kraftstoffrücklauf 5 der Einspritzpumpe 3 ist in FIG 2 und FIG 3, wie bereits angesprochen, über den Wärmetauscher W2 und den Wärmetauscher W1 mit einem siebten Ventil V7 verbunden, insbesondere einem 3/2-Wege-Ventil. Darin zeigt sich ein weitere wesentlicher Unterschied zum Ausführungsbeispiel gemäß FIG 1. Die Heizeinrichtungen W1 und W2 sind in FIG 2 und FIG 3 als Wärmetauscher ausgebildet, die die ohnehin vorhandene hohe Rücklauftemperatur des Kraftstoffs nach Verlassen der Einspritzpumpe 3 ausnutzen. Dies erspart teure und die Batterie bzw. die Lichtmaschine des Fahrzeugs bzw. Bootes belastende elektrische Kraftstofferhitzer. Eine weitere Alternative hierzu wären Wärmetauscher, die die Abwärme des Motor zur Kraftstofferwärmung ausnutzen, beispielsweise über die Durchleitung des Motorkühlwassers durch die Wärmetauscher. Diese Alternative erfordert jedoch eine zusätzliche Pumpe und einen störanfälligen zusätzlichen Aufbau. Außerdem steht die Motorabwärme während der Aufwärmdauer des Motors, die bei Dieselmotoren verhältnismäßig lange ist, nicht zur Verfügung. Somit stellt die in FIG 2 und FIG 3 vorgestellte Lösung mittels Wärmetauschern W1, W2, die direkt die hohe Kraftstofftemperatur (üblicherweise im Bereich von 80 °C bis 100 °C, insbesondere im Bereich von 85 °C bis 95 °C) nach dem Durchtritt durch die Einspritzpumpe 3 "anzapfen", die beste Lösung für die erforderliche Kraftstofferwärmung dar. Diese Lösung ist einfach über handelsübliche Plattenwärmetauscher zu realisieren, sie ist wartungsfrei und belastet nicht die Batterie und/oder die Lichtmaschine des Fahrzeugs bzw. Bootes.

In der Verbindung zwischen dem Kraftstoffrücklauf 5 der Einspritzpumpe 3 und dem siebten Ventil V7 zeigt sich ferner der Unterschied zwischen dem Ausführungsbeispiel gemäß FIG 2 und dem Ausführungsbeispiel gemäß FIG 3. In FIG 2 ist die Kraftstoffleitung nach dem Wärmetauscher W1 direkt an das siebte Ventil V7 geführt. In FIG 3 hingegen ist die Kraftstoffleitung durch eine weitere (dritte) Heizeinrichtung W3 im zweiten Tank T2 für Pflanzenöl und/oder Pflanzenfett geführt. Die Heizeinrichtung W3 ist ein Wärmetauscher W3, der Wärme aus dem zurückgeführten Kraftstoff an das Pflanzenöl und/oder Pflanzenfett im zweiten Tank T2 abgibt und dieses dadurch vorerwärmt. Dieser Wärmetauscher W3 kann beispielsweise als Leitungsspirale im zweiten Tank T2 ausgebildet sein. Entsprechende Baueinheiten sind bekannt, die Leitungsspirale kann beispielsweise aus Metall und/oder Kunststoff bestehen.

Das Vorsehen dieses zusätzlichen Wärmetauschers W3 ist vorteilhaft bei Betrieb der Kraftstoffzuführungseinrichtung 1 bei niedrigen Umgebungstemperaturen, da sich in diesem Fall die eingangs genannte hohe Viskosität des Pflanzenöls bzw. Pflanzenfetts bei niedrigen Temperaturen nachteilig auswirkt und dies durch ein Vorerwärmen bereits im zweiten Tank T2 verhindert wird. Dementsprechend ist klar, dass die Ausführungsvariante gemäß FIG 3 insbesondere für den Einsatz in Regionen geeignet ist, in denen auch niedrige Temperaturen auftreten können, wie beispielsweise in Europa in den Wintermonaten in Ländern nördlich der Alpen oder in den Alpen selbst. In Regionen mit ganzjährig milden oder warmen Temperaturen hingegen können die durch den zusätzlichen Wärmetauscher W3 entstehenden Kosten eingespart werden, er ist hier auch für einen optimalen Betrieb nicht erforderlich. Dementsprechend ist das Ausführungsbeispiel nach FIG 2 für den Einsatz beispielsweise in Ländern südlich der Alpen geeignet. Entsprechend den jeweiligen Einsatzumgebungsbedingungen kann das Ausführungsbeispiel gemäß FIG 2 auch als "Sommervariante" und das Ausführungsbeispiel nach FIG 3 auch als "Wintervariante" bezeichnet werden. In der Herstellung ist die Wintervariante insbesondere aufgrund der zusätzlichen Bauteile aufwändiger und damit teurer, sie ist jedoch selbstverständlich auch in Regionen einsetzbar, für die eigentlich auch die Sommervariante ausreichend ist.

In FIG 2 und FIG 3 ist ferner noch zu erkennen, dass das siebte Ventil V7 auch mit dem Kraftstoffeinlass 10 des ersten Tanks T1 und dem Kraftstoffeinlass 11 des dritten Tanks T3 verbunden ist, wobei der Kraftstoff in einer ersten Stellung V71 des siebten Ventils V7 an den ersten Tank T1 und in einer zweiten Stellung V72 an den dritten Tank T3 gefördert wird.

Über die Steuereinheit werden auch in den Ausführungsbeispielen nach FIG 2 und FIG 3 vier verschiedene Zustände des Kraftstoffleitungssystems 9 geregelt. Diese vier Zustände sind nachfolgend beschrieben (sie gelten gleichermaßen für FIG 2 und FIG 3):

### Erster Zustand:

| | |
|---|---|
| Mischventil V6: | Dieselstellung (V61 offen; V62, V63 geschlossen) |
| Siebtes Ventil V7: | erste Stellung V71 |

Im ersten Zustand des Kraftstoffleitungssystems (bzw. ersten Betriebszustand der Kraftstoffzuführungseinrichtung) ist ausschließlich Dieselkraftstoff aus dem ersten Tank T1 an den Kraftstoffzulauf 4 der Einspritzpumpe 3 förderbar und Dieselkraftstoff.aus dem Kraftstoffrücklauf 5 der Einspritzpumpe 3 ausschließlich, an den Kraftstoffeinlass 10 des ersten Tanks T1 förderbar.

Im einzelnen fließt im ersten Zustand Dieselkraftstoff aus dem ersten Tank T1 (Dieseltank) zum Dieseleingang V61 des Mischventils V6, das sich in der Dieselstellung befindet. Im Mischventil V6 wird der Dieselkraftstoff an den Ausgang V64 geleitet und von dort zum Wärmetauscher W2. Dort wird der Dieselkraftstoff (bis auf eine kurze Zeitspanne beim Starten des Motors, d.h. bis warmer Rücklaufkraftstoff im Wärmetauscher W2 zur Verfügung steht) auf etwa 60°C bis 70°C erwärmt und weiter an den Kraftstoffzulauf 4 der Einspritzpumpe 3 befördert (Anmerkung: Auf die Erwärmung des Dieselkraftstoffs im Wärmetauscher W2 kommt es letztendlich nicht an, da Dieselkraftstoff auch ohne Erwärmung in der Einspritzpumpe einsetzbar ist, im Unterschied zum Pflanzenöl- bzw. Pflanzenfett). Der überschüssige Kraftstoff fließt vom Kraftstoffrücklauf 5 der Einspritzpumpe 3 über das in erste Stellung V71 geschaltete Ventil V7 zurück in den ersten Tank T1 (Dieseltank). Dabei gibt der warme zurückgeführte Kraftstoff Wärme in den Wärmetauschern W1, W2 und gegebenenfalls (Wintervariante FIG 3) W3 ab.

### Zweiter Zustand:

| | |
|---|---|
| Mischventil V6: | Mischungsstellung (V61, V62 offen; V63 geschlossen) |
| Siebtes Ventil V7: | zweite Stellung V72 |

Im zweiten Zustand des Kraftstoffleitungssystems (bzw. zweiten Betriebszustand der Kraftstoffzuführungseinrichtung) ist Dieselkraftstoff aus dem ersten Tank T1 (Dieseltank) und Pflanzenöl und/oder -fett aus dem zweiten Tank T2 (Pflanzenöl/-fett-Tank) zum Mischventil V6 förderbar, das sich in seiner Mischungsstellung befindet, so dass an seinem Ausgang V64 ein Kraftstoffgemisch im eingestellten Mischungsverhältnis austritt. Von dort aus ist das erzeugte Kraftstoffgemisch zur Einspritzpumpe 3 förderbar. Das Gemisch ist schließlich vom Kraftstoffrücklauf 5 der Einspritzpumpe 3 ausschließlich an den Kraftstoffeinlass 11 des dritten Tanks T3 förderbar.

Im einzelnen fließt im zweiten Zustand Dieselkraftstoff aus dem ersten Tank T1 zum Dieseleingang V61 des Mischventils V6. Gleichzeitig fließt Pflanzenöl bzw. Pflanzenfett (das in der Wintervariante gemäß FIG 3 bereits durch den Wärmetauscher W3 vorerwärmt ist) aus dem zweiten Tank T2 durch den Wärmetauscher W1, worin der Kraftstoff auf etwa 60°C bis 70°C erwärmt wird, zum Filter F.

Die Erwärmung vor dem Filter F ist wichtig, da die Zähflüssigkeit des Pflanzenöls bzw. Pflanzenfetts bei niedrigen Temperaturen den Durchfluss durch den Filter behindern bzw. blockieren kann. Hierbei ist es vorteilhaft, wenn Wärmetauscher W1 und Filter F eine Baueinheit bilden, beispielsweise miteinander verschraubt sind. In diesem Fall wird vorteilhafterweise auch der Filter selbst durch den Wärmetauscher erwärmt und dadurch seine Funktion optimiert.

Vom Filter F fließt der nunmehr gefilterte Kraftstoff zum Pflanzenöl- bzw. -fetteingang V62 des Mischventils V6.

Das Mischventil V6 stellt ein Kraftstoffgemisch aus dem Dieselkraftstoff und dem Pflanzenöl bzw. Pflanzenfett her, und zwar ein Kraftstoffgemisch mit einem vorgegebenen oder vorgebbaren prozentualen Mischverhältnis der beiden Kraftstoffarten. Das Mischventil V6 kann dabei derart ausgebildet sein, dass das vorgegebene oder vorgebbare Mischverhältnis einstellbar (auch: variabel) ist.

Das erzeugte Gemisch wird vom Ausgang V64 des Mischventils V6 an den Wärmetauscher W2 weitergeleitet, wird dort auf etwa 60°C bis 70°C erwärmt und weiter an den Kraftstoffzulauf 4 der Einspritzpumpe 3 befördert. Der überschüssige Kraftstoff (das Gemisch) fließt vom Kraftstoffrücklauf 5 der Einspritzpumpe 3 über das in zweite Stellung V72 geschaltete Ventil V7 in den dritten Tank T3 (Gemischtank) und füllt diesen. Dabei gibt der warme Kraftstoff Wärme in den Wärmetauschern W1, W2 und gegebenenfalls (Wintervariante FIG 3) W3 ab.

Die Aufgabe des dritten Tanks T3 (Gemischtanks) liegt darin, das überschüssige Kraftstoffgemisch zunächst zu speichern und es später (dritter Zustand, siehe unten) dem Dieselmotor erneut zur Verfügung zu stellen.

Der dritte Tank T3 (Gemischtank) ist wiederum mit einem Schwimmschalter (nicht dargestellt) zur Füllstandskontrolle (auch: Kraftstoffvolumen-Kontrolle) ausgestattet.

### Dritter Zustand:

| | |
|---|---|
| Mischventil V6: | Gemischstellung (V61, V62 geschlossen; V63 offen) |
| Siebtes Ventil V7: | zweite Stellung V72 |

Im dritten Zustand des Kraftstoffleitungssystems (bzw. dritten Betriebszustand der Kraftstoffzuführungseinrichtung) ist ausschließlich das Gemisch aus Dieselkraftstoff und Pflanzenöl und/oder -fett aus dem dritten Tank T3 an den Kraftstoffzulauf 4 der Einspritzpumpe 3 förderbar und das überschüssige Gemisch aus dem Kraftstoffrücklauf 5 der Einspritzpumpe 3 ausschließlich an den Kraftstoffeinlass 11 des dritten Tanks T3 förderbar.

Im einzelnen fließt im dritten Zustand das Gemisch aus dem dritten Tank T3 zum Gemischeingang V63 des Mischventils V6, das in die Gemischstellung geschaltet ist. Über den Ausgang V64 des Mischventils V6 gelangt das Gemisch weiter zum Wärmetauschern W2, wird dort auf etwa 60°C bis 70°C erwärmt und weiter an den Kraftstoffzulauf 4 der Einspritzpumpe 3 befördert. Der überschüssige Kraftstoff (das Gemisch) fließt vom Kraftstoffrücklauf 5 der Einspritzpumpe 3 über das in zweite Stellung V72 geschaltete Ventil V7 in den dritten Tank T3 (Gemischtank) und gibt dabei Wärme in den Wärmetauschern W1, W2 und gegebenenfalls (Wintervariante FIG 3) W3 ab.

### Vierter Zustand:

| | |
|---|---|
| Mischventil V6: | Dieselstellung (V61 offen; V62, V63 geschlossen) |
| Siebtes Ventil V7: | zweite Stellung V72 |

Im vierten Zustand des Kraftstoffleitungssystems (bzw. vierten Betriebszustand der Kraftstoffzuführungseinrichtung) ist ausschließlich Dieselkraftstoff aus dem ersten Tank T1 an den Kraftstoffzulauf 4 der Einspritzpumpe 3 förderbar und der überschüssige Dieselkraftstoff und/oder noch vorhandene Gemischreste aus dem Kraftstoffrücklauf 5 der Einspritzpumpe 3 sind ausschließlich an den Kraftstoffeinlass 11 des dritten Tanks T3 förderbar. Hierfür steht im dritten Tank T3 immer ein ausreichendes Restvolumen, das noch gefüllt werden kann, zur Verfügung.

Im einzelnen fließt im vierten Zustand Dieselkraftstoff aus dem ersten Tank T1 (Dieseltank) zum Dieseleingang V61 des Mischventils V6, das sich in der Dieselstellung befindet. Im Mischventil V6 wird der Dieselkraftstoff an den Ausgang V64 geleitet und von dort zum Wärmetauscher W2. Dort wird der Dieselkraftstoff auf etwa 60°C bis 70°C erwärmt und weiter an den Kraftstoffzulauf 4 der Einspritzpumpe 3 befördert. Der überschüssige Kraftstoff (Dieselkraftstoff und/oder noch vorhandenes Gemisch) fließt vom Kraftstoffrücklauf 5 der Einspritzpumpe 3 über das in zweite Stellung V72 geschaltete Ventil V7 in den dritten Tank T3 (Gemischtank).

Die vorstehend beschriebenen Zustände der Ausführungsvarianten nach FIG 2 und FIG 3 werden, vergleichbar dem Ausführungsbeispiel nach FIG 1, folgendermaßen aufeinanderfolgend gesteuert:
Beim Starten des Dieselmotors befindet sich die Kraftstoffzuführungseinrichtung in dem ersten Betriebszustand (erster Zustand des Kraftstoffleitungs systems), das heißt der Dieselmotor läuft im reinen Dieselbetrieb.

Bei Erreichen der Betriebstemperatur des Motors (beispielsweise 87 °C) wird die Kraftstoffzuführungseinrichtung in den zweiten Betriebszustand (zweiter Zustand des Kraftstoffleitungssystems) geschaltet, das heißt der Dieselmotor läuft in einem ersten Gemischbetrieb und der dritte Tank T3 (Gemischtank) wird gefüllt.

Sobald der Schwimmer im dritten Tank T3 (Gemischtank) seine obere vorgegebene Position erreicht hat, wird die Kraftstoffzuführungseinrichtung in den dritten Betriebszustand (dritter Zustand des Kraftstoffleitungssystems) geschaltet, das heißt der Dieselmotor läuft weiterhin in einem Gemischbetrieb, nämlich einem zweiten Gemischbetrieb, in dem der dritte Tank T3 (Gemischtank) entleert wird.

Sobald der Schwimmer im dritten Tank T3 (Gemischtank) seine untere vorgegebene Position erreicht hat (das heißt die Kraftstoffmenge im dritten Tank T3 ist auf ein niedriges Niveau gefallen), wird die Kraftstoffzuführungseinrichtung wieder in den zweiten Betriebszustand (zweiter Zustand des Kraftstoffleitungssystems) geschaltet, das heißt der Dieselmotor läuft wieder im ersten Gemischbetrieb und der dritte Tank T3 (Gemischtank) wird wieder gefüllt.

Ist der dritte Tank bei Erreichen der Betriebstemperatur des Motors im ersten Betriebszustand bereits bis zur oder über die obere vorgegebene Position gefüllt, so wird die Kraftstoffzuführungseinrichtung gleich in den dritten Betriebszustand (dritter Zustand des Kraftstoffleitungssystems) geschaltet und der vorbeschriebene Wechsel zwischen drittem und zweitem Zustand findet anschließend beim Erreichen der unteren vorgegebenen Position statt. Dies ist auch möglich, wenn der dritte Tank bei Erreichen der Betriebstemperatur des Motors zwar noch nicht bis zur oberen vorgegebenen Position gefüllt ist, der Füllstand jedoch über die untere vorgegebene Position hinaus geht.

Der fortwährende Wechsel zwischen zweitem und drittem Betriebszustand bzw. zwischen erstem und zweitem Gemischbetrieb ermöglicht einen Dauerbetrieb des Dieselmotors mit einem Gemisch aus Dieselkraftstoff und Pflanzenöl bzw. Pflanzenfett, wobei das Mischverhältnis zur optimalen Anpassung an den jeweiligen Dieselmotor einstellbar ist (durch entsprechende Einstellung des Mischventils V6).

Wird nun der Zündschlüssel (allgemein: Zündungsschalter, Ein-Aus-Schalter, Ausschalter) des Dieselmotors auf "Aus" gestellt, kann auch bei den Ausführungsbeispielen nach FIG 2 und FIG 3 vorgesehen sein, dass die Steuerelektronik die Motorsteuerung übernimmt. Der Dieselmotor wird dabei nicht sofort ausgeschaltet, vielmehr wird vom gerade eingestellten zweiten oder dritten Betriebszustand der Kraftstoffzuführungseinrichtung in den vierten Betriebszustand geschaltet (vierter Zustand des Kraftstoffleitungssystems).

Wie bereits beim Ausführungsbeispiel gemäß FIG 1 erläutert, ist der vierte Betriebszustand, der auch als Zeitverzögerungsphase bezeichnet werden kann, dazu bestimmt, das in den Leitungen und der Einspritzpumpe noch vorhandene Gemisch auszufördern. Da es nicht in den ersten Tank T1 (Dieseltank) gelangen soll, wird es in den dritten Tank T3 (Gemischtank) gefördert. Im vierten Zustand erfolgt somit ein Durchspülen des Kraftstoffleitungssystems 9 und der Einspritzpumpe 3. Dadurch soll die Kraftstoffzuführungseinrichtung 1 vor dem vollständigen Abschalten des Dieselmotors in einen reinen Diesel-Zustand versetzt werden, um ein problemloses Einschalten des Dieselmotors im kalten Zustand zu ermöglichen. Abhängig von den Längen der Leitungen wird der vierte Zustand für eine entsprechend angepasste Zeitdauer betrieben. Diese ist variabel einstellbar, insbesondere elektrisch und/oder elektronisch und/oder manuell. Sie ist bei der Wintervariante gemäß FIG 3 länger als bei der Sommervariante gemäß FIG 2, da in der Wintervariante wegen des zusätzlichen Wärmetauschers W3 im zweiten Tank T2 insgesamt deutlich längere Kraftstoffleitungen erforderlich sind und damit ein größeres Volumen zu spülen ist.

Nach Ablauf der Zeitdauer kann der Dieselmotor wiederum manuell oder automatisch endgültig ausgeschaltet werden. Es ist aber auch möglich, für eine bestimmte Zeit vorzugsweise automatisch in den ersten Betriebszustand der Kraftstoffzuführungseinrichtung (erster Zustand des Kraftstoffleitungssystems) zu schalten und dadurch den Dieselmotor im "normalen" reinen Dieselbetrieb zu betreiben. Nach etwa zwei bis drei Minuten wird der Dieselmotor dann automatisch endgültig abgestellt.

Bei dem Ventil V7 handelt es sich beispielsweise um ein handelsübliches Magnetventil. Die Steuerung des Ventils V7 kann elektrisch und/oder elektronisch und/oder mechanisch erfolgen.

Die Einstellung des jeweiligen Betriebszustands der Kraftstoffzuführungseinrichtung bzw. des jeweiligen Zustands des Kraftstoffleitungssystems erfolgt durch entsprechende Einstellung der Ventile V6 und V7, beispielsweise durch die Steuereinheit. Die Einstellung eines Betriebszustandes bzw. das Umschalten zwischen den Betriebszuständen erfolgt in Abhängigkeit von der Zündschlüsselposition (Schaltstellung des Zündungsschalters, Ein-Aus-Schalters) und/oder der Temperatur des Dieselmotors (mittels eines üblichen Thermosensors) und/oder der Kraftstofffüllung des dritten Tanks T3 (Gemischtank).

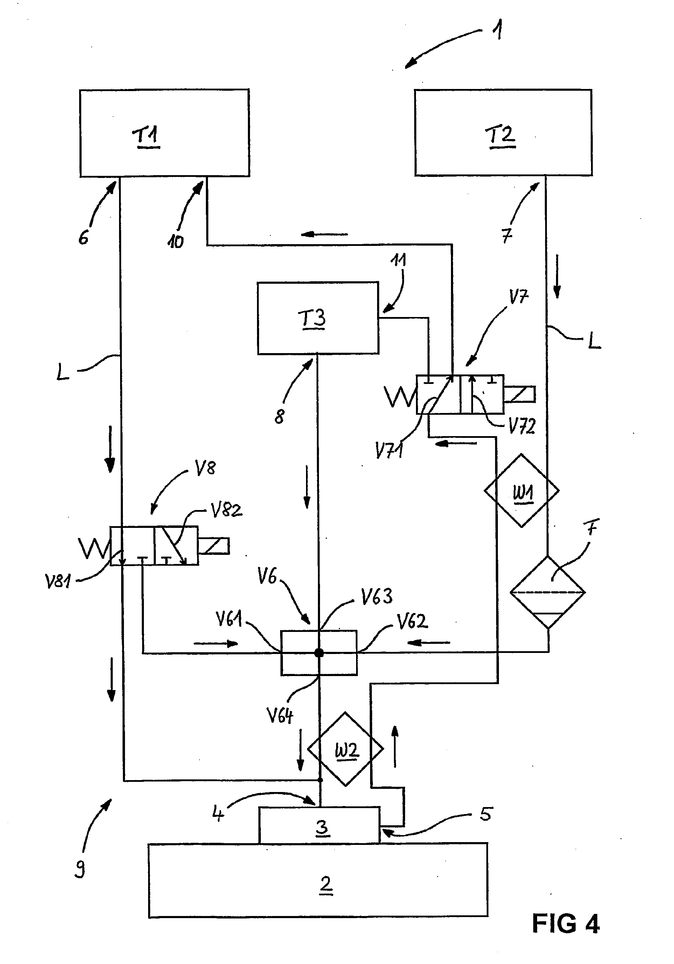

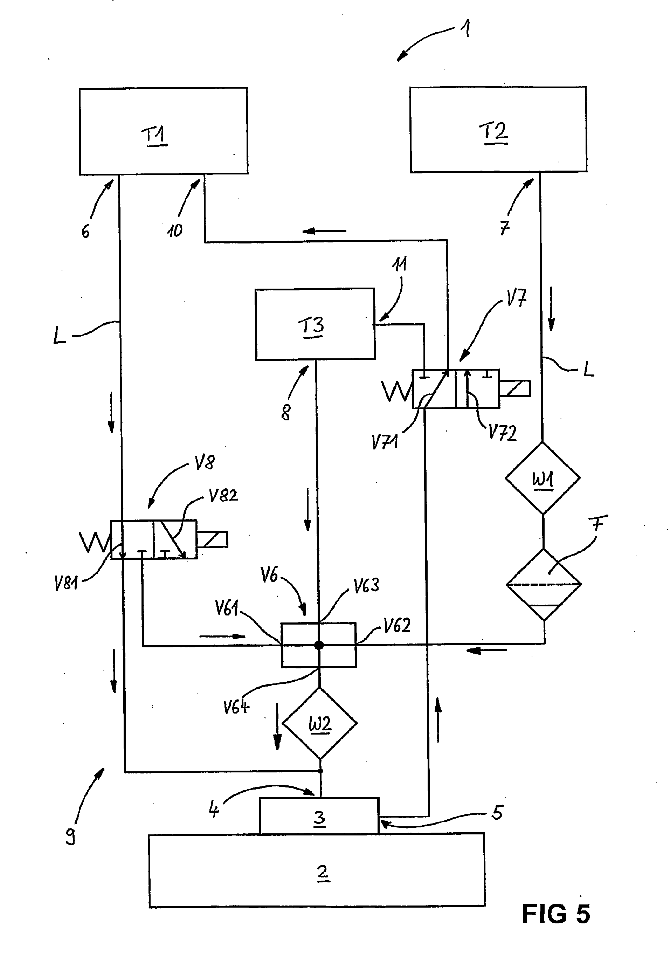

FIG 4 und FIG 5 zeigen zwei weitere, alternative Ausführungsbeispiele einer erfindungsgemäßen Kraftstoffzuführungseinrichtung 1 für einen Dieselmotor 2 mit Einspritzpumpe 3. Das Ausführungsbeispiel nach FIG 4 geht hervor aus der Ausführungsvariante nach FIG 2. Der Unterschied liegt insbesondere im Vorsehen eines zusätzlichen achten Ventils V8 zwischen erstem Tank T1 und Mischventil V6. Dadurch entsteht eine parallel zum Mischventil V6 verlaufende Kraftstoffverbindung zur Einspritzpumpe 3. Das Ausführungsbeispiel nach FIG 5 ist eine Abwandlung des Ausführungsbeispiel nach FIG 4. Der Unterschied liegt in der Anordnung und Ausbildung der Heizeinrichtungen W1 und W2. Dies wird untenstehend näher erläutert.

Wie in den vorstehend beschriebenen Ausführungsbeispielen versorgt auch in den Beispielen nach FIG 4 und FIG 5 jeweils die Einspritzpumpe (bzw. Einspritzanlage) eine Einspritzdüse (nicht dargestellt) mit Kraftstoff. Die Einspritzpumpe 3 weist einen Kraftstoffzulauf 4 und einen Kraftstoffrücklauf 5 auf.

Die Kraftstoffzuführungseinrichtung 1 umfasst sowohl in FIG 4 als auch in FIG 5 wiederum einen ersten Tank T1 für Dieselkraftstoff, einen zweiten Tank T2 für Pflanzenöl und/oder -fett, insbesondere Altpflanzenöl und/oder -fett, und einen dritten Tank T3 zur Aufnahme eines Gemisches aus dem Dieselkraftstoff und dem Pflanzenöl und/oder -fett. Der erste Tank T1 weist einen Kraftstoffauslass 6 und einen Kraftstoffeinlass 10 auf. Der zweite Tank T2 weist einen Kraftstoffauslass 7 auf. Der dritte Tank T3 weist einen Kraftstoffauslass 8 und einen Kraftstoffeinlass 11 auf.

Die Kraftstofftanks T1, T2 und T3 sind über ein Kraftstoffleitungssystem 9 mit der Einspritzpumpe 3 verbunden, wobei die Kraftstoffauslässe 6, 7, 8 aller Tanks T1, T2, T3 mit dem Kraftstoffzulauf 4 der Einspritzpumpe 3 verbunden bzw. verbindbar sind und der Kraftstoffrücklauf 5 der Einspritzpumpe 3 mit dem Kraftstoffeinlass 10 des ersten Tanks T1 und dem Kraftstoffeinlass 11 des dritten Tanks T3 verbunden bzw. verbindbar ist.

Das Kraftstoffleitungssystem 9 umfasst wiederum Kraftstoffleitungen L, ferner sind sowohl im Beispiel nach FIG 4 als auch im Beispiel nach FIG 5 drei Ventile V6, V7, V8 vorgesehen. Die vorgesehenen Kraftstoffflussrichtungen sind durch Pfeile an den Kraftstoffleitungen angegeben.

Aufgabe des Kraftstoffleitungssystems 9 ist, der Einspritzpumpe 3 über den Kraftstoffzulauf 4 den jeweils erforderlichen bzw. gewünschten Kraftstoff aus den Tanks T1, T2, T3 zuzuführen und den überschüssigen Kraftstoff aus der Einspritzpumpe 3 über den Kraftstoffrücklauf 5 an den jeweils vorgesehenen Tank T1, T2, T3 zurückzuführen.

Zur Steuerung des Kraftstoffleitungssystems 9 ist wiederum eine Steuereinheit (nicht dargestellt) vorgesehen, über die unter anderem die Ventile V6, V7 und V8 gesteuert werden. Ferner ist im dritten Tank T3 wiederum ein Schwimmer (nicht dargestellt) vorgesehen, der die Füllung des dritten Tanks erfasst und der der Steuereinheit das Erreichen (oder Unter- bzw. Überschreiten) einer unteren bzw. oberen vorgegebenen Position im dritten Tank T3 signalisiert, das heißt eine minimale bzw. maximale vorgegebene Füllung des dritten Tanks T3.

Im einzelnen ist das Kraftstoffleitungssystem in den Ausführungsbeispielen nach FIG 4 und FIG 5 folgendermaßen aufgebaut:
Der Kraftstoffauslass 6 des ersten Tanks T1 ist über eine Kraftstoffleitung L mit einem, bereits vorstehend kurz angesprochenen, achten Ventil V8, einem 3/2-Wege-Ventil, verbunden.

Der Kraftstoffauslass 7 des zweiten Tanks T2 ist mit einem Mischventil V6 verbunden, und zwar mit dessen Pflanzenöl- bzw. -fetteingang V62. In diese Verbindung ist eine erste Heizeinrichtung W1 und ein Filter F integriert, wobei es sich vorzugsweise wie bei den vorstehenden Beispielen um einen üblichen Ölfilter mit Wasserabscheidung und Entlüftung handelt.

Die erste Heizeinrichtung W1 hat wiederum die Aufgabe, das Pflanzenöl bzw. Pflanzenfett nach dem Austritt aus dem zweiten Tank T2 zu erwärmen, vorzugsweise auf etwa 60°C bis 70°C. Bei der ersten Heizeinrichtung W1 in FIG 4 handelt es sich hierbei um einen Wärmetauscher W1, der dem aus dem Kraftstoffrücklauf 5 der Einspritzpumpe 3 austretenden, erwärmten Kraftstoff Wärme entzieht und diese zur Erwärmung des Pflanzenöls bzw. Pflanzenfetts einsetzt. Im Unterschied hierzu handelt es sich bei der ersten Heizeinrichtung W1 in FIG 5 um eine elektrisch betriebene Heizeinrichtung W1 oder um einen Wärmetauscher, der dem Dieselmotor, insbesondere dem Kühlwasser des Dieselmotors, Wärme entzieht und diese zur Erwärmung des Pflanzenöls bzw. Pflanzenfetts einsetzt.

Auch der Kraftstoffauslass 8 des dritten Tanks T3 ist mit dem Mischventil V6 verbunden, und zwar mit dessen Gemischeingang V63. Ferner ist das achte Ventil V8 mit dem Mischventil V6 verbunden, und zwar mit dessen Dieseleingang V61, wobei dem Mischventil V6 Dieselkraftstoff in der Stellung V82 des achten Ventils V8 zuführbar ist. Des Weiteren ist das achte Ventil V8 mit dem Kraftstoffzulauf 4 der Einspritzpumpe 3 verbunden, hier kann in der Stellung V81 Dieselkraftstoff fließen.

Der Ausgang V64 des Mischventils V6 ist in dem Beispiel nach FIG 4 und in dem Beispiel nach FIG 5 ebenfalls mit dem Kraftstoffzulauf 4 der Einspritzpumpe 3 verbunden. In diese Verbindung ist eine zweite Heizeinrichtung W2 integriert. Diese zweite Heizeinrichtung W2 hat wiederum die Aufgabe, den Kraftstoff vor dem Eintritt in die Einspritzpumpe 3 zu erwärmen, vorzugsweise auf etwa 60°C bis 70°C.

Bei der zweiten Heizeinrichtung W2 in FIG 4 handelt es sich hierbei um einen Wärmetauscher W2, der - wie der Wärmetauscher W1 - dem aus dem Kraftstoffrücklauf 5 der Einspritzpumpe 3 austretenden, erwärmten Kraftstoff Wärme entzieht und dieses in diesem Fall zur Erwärmung des Kraftstoffs vor dem Eintritt in die Einspritzpumpe 3 einsetzt. Im Unterschied hierzu handelt es sich bei der zweiten Heizeinrichtung W2 in FIG 5 um eine elektrisch betriebene Heizeinrichtung W2 oder um einen Wärmetauscher, der dem Dieselmotor, insbesondere dem Kühlwasser des Dieselmotors, Wärme entzieht und diese zur Erwärmung des Kraftstoffs vor dem Eintritt in die Einspritzpumpe 3 einsetzt.

Das Mischventil V6 weist somit drei Eingänge V61, V62, V63 und einen Ausgang V64 auf, wobei die Eingänge V61, V62, V63 je nach Einstellung des Mischventils V6 in unterschiedlichen Kombinationen, wie nachfolgend erläutert, mit dem Ausgang V64 verbindbar sind.

In einer Mischungsstellung des Mischventils V6 sind sowohl der Dieseleingang V61 als auch der Pflanzenöl- bzw. -fetteingang V62 mit dem Ausgang V64 stömungsmäßig verbunden, der Gemischeingang V63 ist verschlossen. Dies bedeutet, dass in der Mischungsstellung Dieselkraftstoff aus dem ersten T1 und Pflanzenöl- und/oder -fett aus dem zweiten Tank T2 im Mischventil V6 gemischt wird und über den Ausgang V64 an die Einspritzpumpe 3 gelangt. Das gewünschte Mischungsverhältnis lässt sich hierbei am Mischventil einstellen bzw. ist durch das Mischventil vorgegeben, beispielsweise durch den Öffnungsquerschnitt an den Eingängen V61, V62. Ein bevorzugtes Mischverhältnis des im Mischventil V6 erzeugten Gemisches ist auch hier 18% Dieselkraftstoff und 82% Pflanzenöl bzw. -fett.

In einer Gemischstellung des Mischventils V6 ist der Gemischeingang V63 strömungsmäßig mit dem Ausgang V64 verbunden, der Dieseleingang V61 und der Pflanzenöl- bzw. -fetteingang V62 sind verschlossen. Dies bedeutet, dass in der Gemischstellung nur Kraftstoffgemisch aus dem dritten Tank T3 über das Mischventil V6 an die Einspritzpumpe 3 gelangt.

Bei dem Mischventil V6 kann es sich wiederum um die bereits bei den vorstehenden Beispielen angeführten, bekannten und handelsüblichen Mischventile handeln, die über eine entsprechende Steuerung in die jeweiligen Stellungen überführbar sind.

Im Unterschied zum Beispiel nach FIG 2 ist dem Mischventil V6 gemäß FIG 4 und FIG 5 das achte Ventil vorgeschaltet. Soll die Einspritzpumpe 3 ausschließlich mit Dieselkraftstoff aus dem ersten Tank T1 versorgt werden, befindet sich das achte Ventil V8 in der Stellung V81, das heißt der reine Dieselkraftstoff gelangt direkt zur Einspritzpumpe 3, ohne Umweg über das Mischventil V6 und die zweite Heizeinrichtung W2. Das Mischventil ist in diesem Fall entbehrlich, eine Dieselstellung wie beim Beispiel nach FIG 2 kann entfallen. Ein Aufheizen des reinen Dieselkraftstoffes ist, wie bereits ausgeführt, nicht erforderlich.

Der Kraftstoffrücklauf 5 der Einspritzpumpe 3 ist in FIG 4, wie bereits angesprochen, über den Wärmetauscher W2 und den Wärmetauscher W1 mit einem siebten Ventil V7 verbunden, insbesondere einem 3/2-Wege-Ventil. Die Heizeinrichtungen W1 und W2 sind in FIG 4 somit als Wärmetauscher ausgebildet, die die ohnehin vorhandene hohe Rücklauftemperatur des Kraftstoffs nach Verlassen der Einspritzpumpe 3 ausnutzen. Dies erspart teure und die Batterie bzw. die Lichtmaschine des Fahrzeugs bzw. Bootes belastende elektrische Kraftstofferhitzer. Auch kann eine alternative Anbindung an das Kühlwassersystem des Motors entfallen. Die gemäß FIG 4 vorgeschlagene Lösung ist einfach über handelsübliche Plattenwärmetauscher zu realisieren, sie ist wartungsfrei und belastet nicht die Batterie und/oder die Lichtmaschine des Fahrzeugs bzw. Bootes.

Im Beispiel nach FIG 5 ist der Kraftstoffrücklauf 5 der Einspritzpumpe 3 direkt mit dem siebten Ventil V7 verbunden, wiederum insbesondere ein 3/2-Wege-Ventil. Eine Kraftstoffleitung über die Heizeinrichtungen W1 und W2 entfällt. Dementsprechend handelt es sich gemäß FIG 5 bei den Heizeinrichtungen W1 und W2 um elektrisch betriebene Heizeinrichtungen oder um Wärmetauscher, die mit dem, Kühlsystem des Dieselmotors verbunden sind.

In FIG 4 und FIG 5 ist ferner noch zu erkennen, dass das siebte Ventil V7 auch mit dem Kraftstoffeinlass 10 des ersten Tanks T1 und dem Kraftstoffeinlass 11 des dritten Tanks T3 verbunden ist, wobei der Kraftstoff in einer ersten Stellung V71 des siebten Ventils V7 an den ersten Tank T1 und in einer zweiten Stellung V72 an den dritten Tank T3 gefördert wird.

Über die Steuereinheit werden auch in den Ausführungsbeispielen nach FIG 4 und FIG 5 vier verschiedene Zustände des Kraftstoffleitungssystems 9 geregelt. Diese vier Zustände sind nachfolgend beschrieben (sie gelten gleichermaßen für FIG 4 und FIG 5):

### Erster Zustand:

| | |
|---|---|
| Achtes Ventil V8: | erste Stellung V81 |
| Mischventil V6: | V61 beliebig; V62, V63 geschlossen |
| Siebtes Ventil V7: | erste Stellung V71 |

Im ersten Zustand des Kraftstoffleitungssystems (bzw. ersten Betriebszustand der Kraftstoffzuführungseinrichtung) ist ausschließlich Dieselkraftstoff aus dem ersten Tank T1 an den Kraftstoffzulauf 4 der Einspritzpumpe 3 förderbar und Dieselkraftstoff aus dem Kraftstoffrücklauf 5 der Einspritzpumpe 3 ausschließlich an den Kraftstoffeinlass 10 des ersten Tanks T1 förderbar.

Im einzelnen fließt im ersten Zustand Dieselkraftstoff aus dem ersten Tank T1 (Dieseltank) über das in erste Stellung V81 geschaltete achte Ventil V8 an den Kraftstoffzulauf 4 der Einspritzpumpe 3. Der überschüssige Kraftstoff fließt vom Kraftstoffrücklauf 5 der Einspritzpumpe 3 über das in erste Stellung V71 geschaltete Ventil V7 zurück in den ersten Tank T1 (Dieseltank). Dabei gibt der warme zurückgeführte Kraftstoff im Beispiel nach FIG 4 Wärme in den Wärmetauschern W1, W2 ab, während dies im Beispiel nach FIG 5 nicht der Fall ist.

### Zweiter Zustand:

| | |
|---|---|
| Achtes Ventil V8: | zweite Stellung V82 |
| Mischventil V6: | Mischungsstellung (V61, V62 offen; V63 geschlossen) |
| Siebtes Ventil V7: | zweite Stellung V72 |

Im zweiten Zustand des Kraftstoffleitungssystems (bzw. zweiten Betriebszustand der Kraftstoffzuführungseinrichtung) ist Dieselkraftstoff aus dem ersten Tank T1 (Dieseltank) über das in Stellung V82 geschaltete achte Ventil V8 und Pflanzenöl und/oder -fett über die erste Heizeinrichtung W1 und den Filter F aus dem zweiten Tank T2 (Pflanzenöl/-fett-Tank) zum Mischventil V6 förderbar, das sich in seiner Mischungsstellung befindet, so dass an seinem Ausgang V64 ein Kraftstoffgemisch im eingestellten Mischungsverhältnis austritt. Von dort aus ist das erzeugte Kraftstoffgemisch über die elektrische Heizeinrichtung W2 zur Einspritzpumpe 3 förderbar. Das Gemisch ist schließlich vom Kraftstoffrücklauf 5 der Einspritzpumpe 3 über das in Stellung V72 geschalteten Ventil V7 ausschließlich an den Kraftstoffeinlass 11 des dritten Tanks T3 förderbar.

Im einzelnen fließt im zweiten Zustand Dieselkraftstoff aus dem ersten Tank T1 über das achte Ventil V8 zum Dieseleingang V61 des Mischventils V6. Gleichzeitig fließt Pflanzenöl bzw. Pflanzenfett aus dem zweiten Tank T2 durch den Wärmetauscher W1, worin der Kraftstoff auf etwa 60°C bis 70°C erwärmt wird, zum Filter F.

Die Erwärmung vor dem Filter F ist wichtig, da die Zähflüssigkeit des Pflanzenöls bzw. Pflanzenfetts bei niedrigen Temperaturen den Durchfluss durch den Filter behindern bzw. blockieren kann. Hierbei ist es vorteilhaft, wenn Wärmetauscher W1 und Filter F eine Baueinheit bilden, beispielsweise miteinander verschraubt sind. In diesem Fall wird vorteilhafterweise auch der Filter selbst durch den Wärmetauscher erwärmt und dadurch seine Funktion optimiert.

Vom Filter F fließt der nunmehr gefilterte Kraftstoff zum Pflanzenöl- bzw. -fetteingang V62 des Mischventils V6.

Das Mischventil V6 stellt ein Kraftstoffgemisch aus dem Dieselkraftstoff und dem Pflanzenöl bzw. Pflanzenfett her, und zwar ein Kraftstoffgemisch mit einem vorgegebenen oder vorgebbaren prozentualen Mischverhältnis der beiden Kraftstoffarten. Das Mischventil V6 kann dabei derart ausgebildet sein, dass das vorgegebene oder vorgebbare Mischverhältnis einstellbar (auch: variabel) ist.

Das erzeugte Gemisch wird vom Ausgang V64 des Mischventils V6 an den Wärmetauscher W2 weitergeleitet, wird dort auf etwa 60°C bis 70°C erwärmt und weiter an den Kraftstoffzulauf 4 der Einspritzpumpe 3 befördert. Der überschüssige Kraftstoff (das Gemisch) fließt vom Kraftstoffrücklauf 5 der Einspritzpumpe 3 über das in zweite Stellung V72 geschaltete Ventil V7 in den dritten Tank T3 (Gemischtank) und füllt diesen. Dabei gibt der warme Kraftstoff in der Variante nach FIG 4 Wärme in den Wärmetauschern W1, W2 ab, wohingegen dies in dem Beispiel nach FIG 5 nicht der Fall ist.

Die Aufgabe des dritten Tanks T3 (Gemischtanks) liegt wiederum darin, das überschüssige Kraftstoffgemisch zunächst zu speichern und es später (dritter Zustand, siehe unten) dem Dieselmotor erneut zur Verfügung zu stellen.

Der dritte Tank T3 (Gemischtank) ist mit einem Schwimmschalter (nicht dargestellt) zur Füllstandskontrolle (auch: Kraftstoffvolumen-Kontrolle) ausgestattet.

### Dritter Zustand:

| | |
|---|---|
| Achtes Ventil V8: | zweite Stellung V82 |
| Mischventil V6: | Gemischstellung (V61, V62 geschlossen; V63 offen) |
| Siebtes Ventil V7: | zweite Stellung V72 |

Im dritten Zustand des Kraftstoffleitungssystems (bzw. dritten Betriebszustand der Kraftstoffzuführungseinrichtung) ist ausschließlich das Gemisch aus Dieselkraftstoff und Pflanzenöl und/oder -fett aus dem dritten Tank T3 an den Kraftstoffzulauf 4 der Einspritzpumpe 3 förderbar und das überschüssige Gemisch aus dem Kraftstoffrücklauf 5 der Einspritzpumpe 3 ausschließlich an den Kraftstoffeinlass 11 des dritten Tanks T3 förderbar.

Im einzelnen fließt im dritten Zustand das Gemisch aus dem dritten Tank T3 zum Gemischeingang V63 des Mischventils V6, das in die Gemischstellung geschaltet ist. Über den Ausgang V64 des Mischventils V6 gelangt das Gemisch weiter zum Wärmetauscher W2, wird dort auf etwa 60°C bis 70°C erwärmt und weiter an den Kraftstoffzulauf 4 der Einspritzpumpe 3 befördert. Der überschüssige Kraftstoff (das Gemisch) fließt vom Kraftstoffrücklauf 5 der Einspritzpumpe 3 über das in zweite Stellung V72 geschaltete Ventil V7 in den dritten Tank T3 (Gemischtank) und gibt dabei - nur in der Variante nach FIG 4, nicht jedoch in der Variante nach FIG 5 -Wärme in den Wärmetauschern W1, W2 ab.

### Vierter Zustand:

| | |
|---|---|
| Achtes Ventil V8: | erste Stellung V81 |
| Mischventil V6: | V61 beliebig; V62, V63 geschlossen |
| Siebtes Ventil V7: | zweite Stellung V72 |

Im vierten Zustand des Kraftstoffleitungssystems (bzw. vierten Betriebszustand der Kraftstoffzuführungseinrichtung) ist ausschließlich Dieselkraftstoff aus dem ersten Tank T1 an den Kraftstoffzulauf 4 der Einspritzpumpe 3 förderbar und der überschüssige Dieselkraftstoff und/oder noch vorhandene Gemischreste aus dem Kraftstoffrücklauf 5 der Einspritzpumpe 3 sind ausschließlich an den Kraftstoffeinlass 11 des dritten Tanks T3 förderbar. Hierfür steht im dritten Tank T3 immer ein ausreichendes Restvolumen, das noch gefüllt werden kann, zur Verfügung.

Im einzelnen fließt im vierten Zustand Dieselkraftstoff aus dem ersten Tank T1 (Dieseltank) über das in erste Stellung V81 geschaltete achte Ventil V8 an den Kraftstoffzulauf 4 der Einspritzpumpe 3. Der überschüssige Kraftstoff (Dieselkraftstoff und/oder noch vorhandenes Gemisch) fließt vom Kraftstoffrücklauf 5 der Einspritzpumpe 3 über das in zweite Stellung V72 geschaltete Ventil V7 in den dritten Tank T3 (Gemischtank).

Die vorstehend beschriebenen Zustände der Ausführungsvarianten nach FIG 4 und FIG 5 werden analog zu den vorstehend beschriebenen Ausführungsbeispielen aufeinanderfolgend gesteuert, so dass auf die entsprechenden Erläuterungen verwiesen werden kann.

Bei den Ventilen V7 und V8 handelt es sich wiederum beispielsweise um handelsübliche Magnetventile. Die Steuerung der Ventile V7, V8 kann elektrisch und/oder elektronisch und/oder mechanisch erfolgen.

Die Einstellung des jeweiligen Betriebszustands der Kraftstoffzuführungseinrichtung bzw. des jeweiligen Zustands des Kraftstoffleitungssystems erfolgt durch entsprechende Einstellung der Ventile V6, V7 und V8, beispielsweise durch die Steuereinheit. Die Einstellung eines Betriebszustandes bzw. das Umschalten zwischen den Betriebszuständen erfolgt wiederum in Abhängigkeit von der Zündschlüsselposition (Schaltstellung des Zündungsschalters, Ein-Aus-Schalters) und/oder der Temperatur des Dieselmotors (mittels eines üblichen Thermosensors) und/oder der Kraftstofffüllung des dritten Tanks T3 (Gemischtank).

Insgesamt ist zu allen Ausführungsbeispielen anzumerken, dass der Übergang zwischen den einzelnen Betriebszuständen der Kraftstoffzuführungseinrichtung bzw. den Zuständen des Kraftstoffleitungssystems nicht plötzlich erfolgen muss, sondern auch langsam erfolgen kann, was sogar bevorzugt ist. Dies wird insbesondere durch das Mischventil V6 in den Ausführungsvarianten nach FIG 2, FIG 3, FIG 4 und FIG 5 ermöglicht.

Ein langsamer Übergang hat den Vorteil, dass dadurch ein problemloser Druckausgleich zwischen den verschiedenen Leitungen möglich ist, wohingegen bei plötzlichen Zustandsänderungen ein ebenso plötzlicher Druckausgleich Probleme, beispielsweise beim Betrieb der Einspritzpumpe, oder gar Beschädigungen, nach sich ziehen kann.

Ferner sei darauf hingewiesen, dass selbstverständlich erster Tank T1, zweiter Tank T2 und dritter Tank T3 bei allen Varianten auch innerhalb eines Gesamttanks verwirklicht sein können, beispielsweise durch eine entsprechende Unterteilung dieses Gesamttanks und durch Vorsehen der erforderlichen Einlässe und Auslässe in den jeweiligen Abschnitten des Gesamttanks.

Das Ausführungsbeispiel gemäß FIG 1 ist insbesondere für Bootmotoren optimiert, die Ausführungsbeispiele gemäß FIG 2 und FIG 3 sowie FIG 4 und FIG 5 sind insbesondere für Kraftfahrzeugmotoren optimiert.

### Bezugszeichenliste

- 1: Kraftstoffzuführungseinrichtung
- 2: Dieselmotor
- 3: Einspritzpumpe
- 4: Kraftstoffzulauf der Einspritzpumpe 3
- 5: Kraftstoffrücklauf der Einspritzpumpe 3
- 6: Kraftstoffauslass des ersten Tanks T1
- 7: Ktaftstoffauslass des zweiten Tanks T2
- 8: Kraftstoffauslass des dritten Tanks T3
- 9: Kraftstoffleitungssystem
- 10: Kraftstoffeinlass des ersten Tanks T1
- 11: Kraftstoffeinlass des dritten Tanks T3

- T1: erster Tank für Dieselkraftstoff
- T2: zweiter Tank für Pflanzenöl und/oder Pflanzenfett
- T3: dritter Tank für Kraftstoffgemisch aus Diesel und Pflanzenöl und/oder -fett

- F: Filter
- L: Kraftstoffleitungen
- V1: erstes Ventil
- V11: erste Stellung des ersten Ventils V1
- V12: zweite Stellung des ersten Ventils V1
- V2: zweites Ventil
- V21: geschlossene Stellung des zweiten Ventils V2
- V22: offene Stellung des zweiten Ventils V2
- V3: drittes Ventil
- V31: erste Stellung des dritten Ventils V3
- V32: zweite Stellung des dritten Ventils V3
- V4: viertes Ventil
- V41: erste Stellung des vierten Ventils V4
- V42: zweite Stellung des vierten Ventils V4
- V5: Mischventil
- V6: Mischventil
- V61: Dieseleingang (auch: -einlass, - zulauf)
- V62: Pflanzenöl- bzw. -fetteingang (auch: -einlass, -zulauf)
- V63: Gemischeingang (auch: -einlass, -zulauf)
- V64: Ausgang (auch: Auslass, Ablauf), Kraftstoffausgang
- V7: siebtes Ventil
- V71: erste Stellung des siebten Ventils V7
- V72: zweite Stellung des siebten Ventils V7
- V8: achtes Ventil
- V81: erste Stellung des achten Ventils V8
- V82: zweite Stellung des achten Ventils V8
- W1,W2,W3: (erste, zweite, dritte) Heizeinrichtung, Wärmetauscher

## Patentansprüche

1. Kraftstoffzuführungseinrichtung (1) für einen Dieselmotors (2) mit einer Einspritzpumpe (3), die eine Einspritzdüse mit Kraftstoff versorgt und die einen Kraftstoffzulauf (4) und einen Kraftstoffrücklauf (5) aufweist, umfassend
a) mindestens einen ersten Tank (T1) für Dieselkraftstoff,
**dadurch gekennzeichnet, dass** die Kraftstoffzuführungseinrichtung ferner umfasst:
b) mindestens einen zweiten Tank (T2) für Pflanzenöl und/oder -fett, insbesondere Altpflanzenöl und/oder -fett,
c) mindestens einen dritten Tank (T3) zur Aufnahme eines Gemisches aus dem Dieselkraftstoff und dem Pflanzenöl und/oder -fett,
d) wobei jeder der mindestens drei Tanks (T1; T2; T3) mindesten einen Kraftstoffauslass (6; 7; 8) aufweist,
e) ein Kraftstoffleitungen (L) und Kraftstoffventile (V1; V2; V3; V4; V5; V6; V7; V8) umfassendes Kraftstoffleitungssystexn (9),
e1) das die Kraftstoffauslässe (6; 7; 8) aller Tanks (T1; T2; T3) mit dem Kraftstoffzulauf (4) der Einspritzpumpe (3) verbindet und
e2) das den Kraftstofftücklauf (5) der Einspritzpumpe (3) mit einem Kraftstoffeinlass (10) des ersten Tanks (T1) und einem Kraftstoffeinlass (11) des dritten Tanks (T3) verbindet, und
f) eine Steuereinheit zur Steuerung des Kraftstoffflusses durch das Kraftstoffleitungssystem (9),
g) wobei in einem ersten Zustand des Ktaftstoffleitungssystems (9) ausschließlich Dieselkraftstoff aus dem ersten Tank (T1) an den Kraftstoffzulauf (4) der Einspritzpumpe (3) förderbar ist und Dieselkraftstoff aus dem Kraftstoffrücklauf (5) der Einspritzpumpe (3) ausschließlich an den Kraftstoffeinlass (10) des ersten Tanks (T1) förderbar ist,
h) wobei in einem zweiten Zustand des Kraftstoffleitungssystems (9) Dieselkraftstoff aus dem ersten Tank (T1) und Pflanzenöl und/oder -fett aus dem zweiten Tank (T2) unter vorausgehender Mischung im Kraftstoffleitungssystem (9) an den Kraftstoffzulauf (4) der Einspritzpumpe (3) förderbar ist und das Gemisch aus dem Kraftstoffrücklauf (5) der Einspritzpumpe (3) ausschließlich an den Kraftstoffeinlass (11) des dritten Tanks (T3) förderbar ist, und
i) wobei in einem dritten Zustand des Kraftstoffleitungssystems (9) ausschließlich das Gemisch aus Dieselkraftstoff und Pflanzenöl und/oder -fett aus dem dritten Tank (T3) an den Kraftstoffzulauf (4) der Einspritzpumpe (3) förderbar ist und das Gemisch aus dem Kraftstoffrücklauf (5) der Einspritzpumpe (3) ausschließlich an den Kraftstoffeinlass (11) des dritten Tanks (T3) förderbar ist.

2. Kraftstoffzuführungseinrichtung nach Anspruch 1,
**dadurch gekennzeichnet, dass**
in einem vierten Zustand des Kraftstoffleitungssystems (9) ausschließlich Dieselkraftstoff aus dem ersten Tank (T1) an den Kraftstoffzulauf (4) der Einspritzpumpe (3) förderbar ist und der Dieselkraftstoff und/oder noch vorhandene Gemischreste aus dem Kraftstoffrücklauf (5) der Einspritzpumpe (3) ausschließlich an den Kraftstoffeinlass (11) des dritten Tanks (T3) förderbar sind.

3. Kraftstoffzuführungseinrichtung nach Anspruch 1 oder 2,
**dadurch gekennzeichnet, dass**
das Kraftstoffleitungssystem (9) mindestens ein Mischventil (V5; V6) zur Bereitstellung eines Gemisches aus Dieselkraftstoff aus dem ersten Tank (T1) und Pflanzenöl und/oder -fett aus dem zweiten Tank (T2) umfasst.

4. Kraftstoffzuführungseinrichtung nach einem der vorhergehenden Ansprüche,
**dadurch gekennzeichnet, dass**
a) der Kraftstoffauslass (6) des ersten Tanks (T1) mit einem ersten Ventil (V1), insbesondere einem 3/2-Wege-Ventil, verbunden ist,
b) der Kraftstoffauslass (7) des zweiten Tanks (T2) mit einem zweiten Ventil (V2), insbesondere einem 2/2-Wege-Ventil, verbunden ist,
c) ein Kraftstoffeinlass (10) des ersten Tanks (T1) und ein Kraftstoffeinlass (11) des dritten Tanks (T3) mit einem dritten Ventil (V3), insbesondere einem 3/2-Wege-Ventil, verbunden sind,
d) das erste Ventil (V1) mit einem vierten Ventil (V4), insbesondere einem 3/2-Wege-Ventil, verbunden ist,
e) erstes Ventil (V1) und zweites Ventil (V2) mit einem Mischventil (V5) verbunden sind,
f) das Mischventil (V5) mit dem vierten Ventil (V4) verbunden ist,
g) der Kraftstoffauslass (8) des dritten Tanks (T3) mit dem vierten Ventil (V4) verbunden ist,
h) das vierte Ventil (V4) mit dem Kraftstoffzulauf (4) der Einspritzpumpe (3) verbunden ist, und
i) der Kraftstoffrücklauf (5) der Einspritzpumpe (3) mit dem dritten Ventil (V3) verbunden ist,
j) wobei in einem ersten Zustand des Kraftstoffleitungssystems (9) das erste Ventil (V1) in eine erste Stellung (V11), das zweite Ventil (V2) in eine geschlossene Stellung (V21), das dritte Ventil (V3) in eine erste Stellung (V31) und das vierte Ventil (V4) in eine erste Stellung (V41) geschaltet ist, wobei ausschließlich Dieselkraftstoff aus dem ersten Tank (T1) an den Kraftstoffzulauf (4) der Einspritzpumpe (3) förderbar, ist und Dieselkraftstoff aus dem Kraftstoffrücklauf (5) der Einspritzpumpe (3) ausschließlich an den Kraftstoffeinlass (10) des ersten Tanks (T1) förderbar ist,
k) wobei in einem zweiten Zustand des Kraftstoffleitungssystems (9) das erste Ventil (V1) in eine zweite Stellung (V12), das zweite Ventil (V2) in eine geöffnete Stellung (V22), das dritte Ventil (V3) in eine zweite Stellung (V32) und das vierte Ventil (V4) in eine erste Stellung (V41) geschaltet ist, wobei Dieselkraftstoff aus dem ersten Tank (T1) und Pflanzenöl und/oder -fett aus dem zweiten Tank (T2) zum Mischventil (V5) förderbar sind und das Gemisch vom Mischventil (V5) an den Kraftstoffzulauf (4) der Einspritzpumpe (3) förderbar ist und das Gemisch aus dem Kraftstoffrücklauf (5) der Einspritzpumpe (3) ausschließlich an den Kraftstoffeinlass (11) des dritten Tanks (T3) förderbar ist, und
l) wobei in einem dritten Zustand des Kraftstoffleitungssystems (9) das erste Ventil (V1) in eine erste Stellung (V11) oder zweite Stellung (V12), das zweite Ventil (V2) in eine geschlossene Stellung (V21), das dritte Ventil (V3) in eine zweite Stellung (V32) und das vierte Ventil (V4) in eine zweite Stellung (V42) geschaltet ist, wobei ausschließlich das Gemisch aus Dieselkraftstoff und Pflanzenöl und/oder -fett aus dem dritten Tank (T3) an den Kraftstoffzulauf (4) der Einspritzpumpe (3) förderbar ist und das Gemisch aus dem Kraftstoffrücklauf (5) der Einspritzpumpe (3) ausschließlich an den Kraftstoffeinlass (11) des dritten Tanks (T3) förderbar ist.

5. Kraftstoffzuführungseinrichtung nach Anspruch 4,
**dadurch gekennzeichnet, dass**
in einem vierten Zustand des Kraftstoffleitungssystems (9) das erste Ventil (V1) in eine erste Stellung (V11), das zweite Ventil (V2) in eine geschlossene Stellung (V21), das dritte Ventil (V3) in eine zweite Stellung (V32) und das vierte Ventil (V4) in eine erste Stellung (V41) geschaltet ist, wobei ausschließlich Dieselkraftstoff aus dem ersten Tank (T1) an den Kraftstoffzulauf (4) der Einspritzpumpe (3) förderbar ist und der Dieselkraftstoff und/oder noch vorhandene Gemischreste aus dem Kraftstoffrücklauf (5) der Einspritzpumpe (3) ausschließlich an den Kraftstoffeinlass (11) des dritten Tanks (T3) förderbar sind.

6. Kraftstoffzuführungseinrichtung nach einem der Ansprüche 1 bis 3, **gekennzeichnet durch**
a) ein Mischventil (V6) mit einem Dieseleingang (V61) und einem Pflanzenöl und/oder -fett-Eingang (V62) und einem Gemischeingang (V63) und einem Kraftstoffausgang (V64),
b) wobei in einer Dieselstellung des Mischventils (V6) nur der Dieseleingang (V61) mit dem Kraftstoffausgang (V64) strömungsmäßig verbunden ist,
c) wobei in einer Mischungsstellung des Mischventils (V6) der Dieseleingang (V61) und der Pflanzenöl und/oder -fett-Eingang (V62), jedoch nicht der Gemischeingang (V63) mit dem Kraftstoffausgang (V64) strömungsmäßig verbunden sind,
d) wobei in einer Gemischstellung des Mischventils (V6) nur der Gemischeingang (V63) mit dem Kraftstoffauslass (V64) strömungsmäßig verbunden ist,
e) wobei der Kraftstoffauslass (6) des ersten Tanks (T1) mit dem Dieseleingang (V61) des Mischventils (V6) verbunden ist,
f) wobei der Ktaftstoffauslass (7) des zweiten Tanks (T2) mit dem Pflanzenöl und/oder -fett-Eingang (V62) des Mischventils (V6) verbunden ist,
g) wobei ein Kraftstoffeinlass (10) des ersten Tanks (T1) und ein Kraftstoffeinlass (11) des dritten Tanks (T3) mit einem siebten Ventil (V7), insbesondere einem 3/2-Wege-Ventil, verbunden sind,
h) wobei das Mischventil (V6) mit dem Ktaftstoffzulauf (4) der Einspritzpumpe (3) verbunden ist,
i) wobei der Kraftstoffrücklauf (5) der Einspritzpumpe (3) mit dem siebten Ventil (V7) verbunden ist,
j) wobei in einem ersten Zustand des Kraftstoffleitungssystems (9) das Mischventil (V6) in die Dieselstellung und das siebte Ventil (V7) in eine erste Stellung (V71) geschaltet ist, wobei ausschließlich Dieselkraftstoff aus dem ersten Tank (T1) an den Kraftstoffzulauf (4) der Einspritzpumpe (3) förderbar ist und Dieselkraftstoff aus dem Kraftstoffrücklauf (5) der Einspritzpumpe (3) ausschließlich an den Kraftstoffeinlass (10) des ersten Tanks (T1) förderbar ist,
k) wobei in einem zweiten Zustand des Kraftstoffleitungssystems (9) das Mischventil (V6) in die Mischungsstellung und das siebte Ventil (V7) in eine zweite Stellung (V72) geschaltet ist, wobei Dieselkraftstoff aus dem ersten Tank (T1) und Pflanzenöl und/oder -fett aus dem zweiten Tank (T2) zum Mischventil (V6) förderbar sind und das Gemisch vom Mischventil (V6) an den Kraftstoffzulauf (4) der Einspritzpumpe, (3) förderbar ist und das Gemisch aus dem Kraftstoffrücklauf (5) der Einspritzpumpe (3) ausschließlich an den Kraftstoffeinlass (11) des dritten Tanks (T3) förderbar ist, und
l) wobei in einem dritten Zustand des Kraftstoffleitungssystems (9) das Mischventil (V6) in die Gemischstellung und das siebte Ventil (V7) in die zweite Stellung (V72) geschaltet ist, wobei ausschließlich das Gemisch aus Dieselkraftstoff und Pflanzenöl und/oder -fett aus dem dritten Tank (T3) an den Kraftstoffzulauf (4) der Einspritzpumpe, (3) förderbar ist und das Gemisch aus dem Kraftstoffrücklauf (5) der Einspritzpumpe (3) ausschließlich an den Kraftstoffeinlass (11) des dritten Tanks (T3) förderbar ist.

7. Kraftstoffzuführungseinrichtung nach Anspruch 6,
**dadurch gekennzeichnet, dass**
in einem vierten Zustand des Kraftstoffleitungssystems (9) das Mischventil (V6) in den Dieselzustand und das siebte Ventil (V7) in die zweite Stellung (V72) geschaltet ist, wobei ausschließlich Dieselkraftstoff aus dem ersten Tank (T1) an den Kraftstoffzulauf (4) der Einspritzpumpe (3) förderbar ist und der Dieselkraftstoff und/oder noch vorhandene Gemischreste aus dem Kraftstoffrücklauf (5) der Einspritzpumpe (3) ausschließlich an den Kraftstoffeinlass (11) des dritten Tanks (T3) förderbar sind.

8. Kraftstoffzuführungseinrichtung nach einem der Ansprüche 1 bis 3, **gekennzeichnet durch**
a) ein Mischventil (V6) mit einem Dieseleingang (V61) und einem Pflanzenöl und/oder -fett-Eingang (V62) und einem Gemischeingang (V63) und einem Kraftstoffausgang (V64),
b) wobei der Kraftstoffauslass (6) des ersten Tanks (T1) mit einem achten Ventil (V8), insbesondere einem 3/2-Wege-Ventil, verbunden ist,
c) wobei das achte Ventil (V8) mit dem Dieseleingang (V61) des Mischventils (V6) und mit dem Kraftstoffzulauf (4) der Einspritzpumpe (3) verbunden ist,
d) wobei in einer Mischungsstellung des Mischventils (V6) der Dieseleingang (V61) und der Pflanzenöl und/oder -fett-Eingang (V62), jedoch nicht der Gemischeingang (V63) mit dem Kraftstoffausgang (V64) strömungsmäßig verbunden sind,
e) wobei in einer Gemischstellung des Mischventils (V6) nur der Gemischeingang (V63) mit dem Kraftstoffauslass (V64) strömungsmäßig verbunde ist,
f) wobei der Kraftstoffauslass (7) des zweiten Tanks (T2) mit dem Pflanzenöl und/oder -fett-Eingang (V62) des Mischventils (V6) verbunden ist,
g) wobei ein Kraftstoffeinlass (10) des ersten Tanks (T1) und ein Kraftstoffeinlass (11) des dritten Tanks (T3) mit einem siebten Ventil (V7), insbesondere einem 3/2-Wege-Ventil, verbunde sind,
h) wobei das Mischventil (V6) mit dem Kraftstoffzulauf (4) der Einspritzpumpe (3) verbunden ist,
i) wobei der Kraftstoffrücklauf (5) der Einspritzpumpe (3) mit dem siebten Ventil (V7) verbunden ist,
j) wobei in einem ersten Zustand des Kraftstoffleitungssystems (9) das achte Ventil (V8) in eine erste Stellung (V81) und der Pflanzenöl und/oder -fett-Eingang (VG2) sowie der Gemischeingang (V63) des Mischventils (V6) in eine geschlossene Stellung und das siebte Ventil (V7) in eine erste Stellung (V71) geschaltet sind, wobei ausschließlich Dieselkraftstoff aus dem ersten Tank (T1) an den Kraftstoffzulauf (4) der Einspritzpumpe (3) förderbar ist und Dieselkraftstoff aus dem Kraftstoffrücklauf (5) der Einspritzpumpe (3) ausschließlich an den Kraftstoffeinlass (10) des ersten Tanks (T1) förderbar ist,
k) wobei in einem zweiten Zustand des Kraftstoffleitungssystems (9) das achte Ventil (V8) in eine zweite Stellung (V82) und das Mischventil (V6) in die Mischungsstellung und das siebte Ventil (V7) in eine zweite Stellung (V72) geschaltet ist, wobei Dieselkraftstoff aus dem ersten Tank (T1) und Pflanzenöl und/oder -fett aus dem zweiten Tank (T2) zum Mischventil (V6) förderbar sind und das Gemisch vom Mischventil (V6) an den Kraftstoffzulauf (4) der Einspritzpumpe (3) förderbar ist und das Gemisch aus dem Kraftstoffrücklauf (5) der Einspritzpumpe (3) ausschließlich an den Kraftstoffeinlass (11) des dritten Tanks (T3) förderbar ist, und
l) wobei in einem dritten Zustand des Kraftstoffleitungssystems (9) das achte Ventil (V8) in eine zweite Stellung (V82) und das Mischventil (V6) in die Gemischstellung und das siebte Ventil (V7) in die zweite Stellung (V72) geschaltet ist, wobei ausschließlich das Gemisch aus Dieselkraftstoff und Pflanzenöl und/oder -fett aus dem dritten Tank (T3) an den Kraftstoffzulauf (4) der Einspritzpumpe (3) förderbar ist und das Gemisch aus dem Kraftstoffrücklauf (5) der Einspritzpumpe (3) ausschließlich an den Kraftstoffeinlass (11) des dritten Tanks (T3) förderbar ist.

9. Kraftstoffzuführungseinrichtung nach Anspruch 8,
**dadurch gekennzeichnet, dass**
in einem vierten Zustand des Kraftstoffleitungssystems (9)) das achte Ventil (V8) in eine erste Stellung (V81) und der Pflanzenöl und/oderfett-Eingang (V62) sowie der Gemischeingang (V63) des Mischventils (V6) in eine geschlossene Stellung und das siebte Ventil (V7) in die zweite Stellung (V72) geschaltet sind, wobei ausschließlich Dieselkraftstoff aus dem ersten Tank (T1) an den Kraftstoffzulauf (4) der Einspritzpumpe (3) förderbar ist und der Dieselkraftstoff und/oder noch vorhandene Gemischreste aus dem Kraftstoffrücklauf (5) der Einspritzpumpe (3) ausschließlich an den Kraftstoffeinlass (11) des dritten Tanks (T3) förderbar sind.

10. Dieselmotor (2) mit einer Einspritzpumpe (3), umfassend eine Kraftstoffzuführungseinrichtung (1) nach einem der vorhergehenden Ansprüche.

11. Verfahren zum Betreiben einer Kraftstoffzuführungseinrichtung (1) für einen Dieselmotor (2) mit einer Einspritzpumpe (3), insbesondere einer Kraftstoffzuführungseinrichtung (1) nach einen der Ansprüche 1 bis 9,
a) wobei die Kraftstoffzuführungseinrichtung (1) umfasst
a1) mindestens einen ersten Tank (T1) für Dieselkraftstoff,
a2) mindestens einen zweiten Tank (T2) für Pflanzenöl und/oder -fett, insbesondere Altpflanzenöl und/oder -fett,
a3) mindestens einen dritten Tank (T3) zur Aufnahme eines Gemisches aus dem Dieselkraftstoff und dem Pflanzenöl und/oder -fett,
a4) ein Kraftstoffleitungen (L) und Kraftstoffventile (V1; V2; V3; V4; V5; V6; V7; V8) umfassendes Kraftstoffleitungssystem (9) zwischen den Tanks (T1; T2; T3) und der Einspritzpumpe (3), und
a5) eine Steuereinheit zur Steuerung des Kraftstoffflusses durch das Kraftstoffleitungssystem (9),
b) bei dem beim Anlassen des Dieselmotors (2) bis zum Erreichen der Betriebstemperatur des Dieselmotors (2), insbesondere etwa 80°C bis etwa 95°C, vorzugsweise etwa 87°C bis etwa 90°C, in einem ersten Betriebszustand der Kraftstoffzuführungseinrichtung (1) Dieselkraftstoff aus dem ersten Tank (T1) zur Einspritzpumpe (3) gefördert wird und Dieselkraftstoff von der Einspritzpumpe (3) ausschließlich an den ersten Tank (T1) gefördert wird,
c) bei dem nach Erreichen der Betriebstemperatur des Dieselmotors (2) in einem zweiten Betriebszustand der Kraftstoffzuführungseinrichtung (1) Dieselkraftstoff aus dem ersten Tank (T1) und Pflanzenöl und/oder - fett aus einem zweiten Tank (T2) gemischt werden, insbesondere in einem Mischventil (V5; V6), und anschließend ausschließlich das Gemisch an die Einspritzpumpe (3) gefördert wird und das Gemisch von der Einspritzpumpe (3) an den dritten Tank (T3) gefördert wird, und zwar solange bis im dritten Tank (T3) eine vorgegebene oberen Füllhöhe erreicht oder überschritten ist,
d) bei dem nach Erreichen oder Überschreiten der vorgegebenen oberen Füllhöhe im dritten Tank (T3) bis zum Erreichen oder Unterschreiten einer vorgegebenen unteren Füllhöhe im dritten Tank (T3) in einem dritten Betriebszustand der Kraftstoffzuführungseinrichtung (1) ausschließlich das Gemisch aus Dieselkraftstoff und Pflanzenöl und/oder -fett aus dem dritten Tank (T3) an die Einspritzpumpe (3) gefördert wird und das Gemisch von der Einspritzpumpe (3) ausschließlich an den dritten Tank (T3) gefördert wird,
e) bei dem nach erneutern Erreichen oder Unterschreiten der vorgegebenen unteren Füllhöhe bis zum Erreichen oder Überschreiten der vorgegebenen oberen Füllhöhe wiederum in dem zweiten Betriebszustand Dieselkraftstoff aus dem ersten Tank (T1) und Pflanzenöl und/oder - fett aus dem zweiten Tank (T2) gemischt wird, insbesondere in einem Mischventil (V5; V6), und anschließend das Gemisch an die Einspritzpumpe (3) gefördert wird und das Gemisch von der Einspritzpumpe (3) ausschließlich an den dritten Tank (T3) gefördert wird,
f) bei dem anschließend die Kraftstoffzuführungseinrichtung (1) weiter im Wechsel nach Schritt d) und nach Schritt e) betrieben wird, und zwar bis zum Einleiten einer Abstellphase des Dieselmotors (2) oder bis zum Abstellen des Dieselmotors (2),

12. Verfahren nach Anspruch 11,
**dadurch gekennzeichnet, dass**
beim Einleiten einer Abstellphase des Dieselmotors (2) in einem vierten Betriebszustand der Kraftstoffzuführungseinrichtung (1) ausschließlich Dieselkraftstoff aus dem ersten Tank (T1) an die Einspritzpumpe (3) gefördert wird und Dieselkraftstoff und/oder noch vorhandene Gemischreste von der Einspritzpumpe (3) ausschließlich an den dritten Tank (T3) gefördert werden, und zwar für eine, insbesondere in Abhängigkeit vom durchzuspülenden Leitungsvolumen, vorgegebene Zeit.

13. Verfahren nach Anspruch 12,
**dadurch gekennzeichnet, dass**
nach Ablauf der vorgegebenen Zeit der Dieselmotor (2) endgültig abgeschaltet wird oder bis zum endgültigen Abschalten des Dieselmotors (2) im ersten Betriebszustand der Kraftstoffzuführungseinzichtung (1) Dieselkraftstoff aus dem ersten Tank (T1) zur Einspritzpumpe (3) gefördert wird und Dieselkraftstoff von der Einspritzpumpe (3) ausschließlich an den ersten Tank (T1) gefördert wird.

14. Verfahren nach einem der Ansprüche 11 bis 13,
**dadurch gekennzeichnet, dass**
das Pflanzenöl und/oder -fett im zweiten Tank (T2) und/oder nach dem Austritt aus dem zweiten Tank (T2) und/oder das Gemisch vor dem Eintritt in die Einspritzpumpe (3) erwärmt wird, insbesondere auf etwa 60°C bis 70°C, insbesondere durch eine oder mehrere Heizeinrichtungen (W1, W2, W3), vorzugsweise elektrisch betrieben Heizeinrichtungen und/oder Wärmetauscher (W1, W2, W3), die Wärme aus dem von der Einspritzpumpe (3) zurücklaufenden Kraftstoff an den zu der Einspritzpumpe, (3) hinlaufenden Kraftstoff übertragen.

15. Verfahren nach einem der Ansprüche 11 bis 14,
**dadurch gekennzeichnet, dass**
im zweiten Betriebszustand der Kraftstoffzuführungseintichtung (1) beim Mischen von Dieselkraftstoff und Pflanzenöl und/oder -fett, insbesondere in einem Mischventil (V6), ein Gemisch erzeugt wird mit einem Mischungsverhältnis im Bereich von 7% Diesel und 93% Pflanzenöl und/oder -fett bis 93% Diesel und 7% Pflanzenöl und/oder -fett, insbesondere einem Mischungsverhältnis im Bereich von 15% Diesel und 85% Pflanzenöl und/oder -fett bis 20% Diesel und 80% Pflanzenöl und/oder -fett, vorzugsweise von etwa 18% Diesel und 82% Pflanzenöl und/oder -fett.

## Claims

1. Fuel supply device (1) for a diesel engine (2) with an injection pump (3) which supplies an injection nozzle with fuel and which has a fuel inflow (4) and a fuel return (5), comprising
a) at least a first tank (T1) for diesel fuel,
**characterised in that** the fuel supply device further comprises:
b) at least a second tank (T2) for vegetable oil and/or fat, in particular used vegetable oil and/or fat,
c) at least a third tank (T3) for receiving a mixture of the diesel fuel and the vegetable oil and/or of fat,
d) each of the at least three tanks (T1; T2; T3) having at least one fuel outlet (6; 7; 8),
e) a fuel line system (9) which comprises fuel lines (L) and fuel valves (V1; V2; V3; V4; V5; V6; V7; V8),
e1) connects the fuel outlets (6; 7; 8) of all the tanks (T1; T2; T3) to the fuel inflow (4) of the injection pump (3) and
e2) connects the fuel return (5) of the injection pump (3) to a fuel inlet (10) of the first tank (T1) and a fuel inlet (11) of the third tank (T3), and
f) a control unit for controlling the flow of fuel through the fuel line system (9),
g) wherein, in a first state of the fuel line system (9), it is possible to convey exclusively diesel fuel from the first tank (T1) to the fuel inflow (4) of the injection pump (3) and it is possible to convey diesel fuel from the fuel return (5) of the injection pump (3) exclusively to the fuel inlet (10) of the first tank (T1),
h) wherein, in a second state of the fuel line system (9), it is possible to convey diesel fuel from the first tank (T1) and vegetable oil and/or fat from the second tank (T2), while being mixed beforehand in the fuel line system (9), to the fuel inflow (4) of the injection pump (3) and it is possible to convey the mixture from the fuel return (5) of the injection pump (3) exclusively to the fuel inlet (11) of the third tank (T3), and
i) wherein, In a third state of the fuel line system (9), it is possible to convey exclusively the mixture of diesel fuel and vegetable oil and/or fat from the third tank (T3) to the fuel inflow (4) of the injection pump (3) and it is possible to convey the mixture from the fuel return (5) of the injection pump (3) exclusively to the fuel inlet (11) of the third tank (T3).

2. Fuel supply device according to claim 1,
**characterised in that**,
in a fourth state of the fuel line system (9), it is possible to convey exclusively diesel fuel from the first tank (T1) to the fuel inflow (4) of the injection pump (3) and it is possible to convey the diesel fuel and/or remaining mixture remnants from the fuel return (5) of the injection pump (3) exclusively to the fuel inlet (11) of the third tank (T3).

3. Fuel supply device according to claim 1 or 2,
**characterised in that**
the fuel line system (9) comprises at least one mixing valve (V5; V6) for providing a mixture of diesel fuel from the first tank (T1) and vegetable oil and/or fat from the second tank (T2).

4. Fuel supply device according to one of the preceding claims, **characterised in that**
a) the fuel outlet (6) of the first tank (T1) is connected to a first valve (V1), in particular a 3/2-way valve,
b) the fuel outlet (7) of the second tank (T2) is connected to a second valve (V2), in particular a 2/2-way valve,
c) a fuel inlet (10) of the first tank (T1) and a fuel inlet (11) of the third tank (T3) are connected to a third valve (V3), in particular a 3/2-way valve,
d) the first valve (V1) is connected to a fourth valve (V4), in particular a 3/2-way valve,
e) the first valve (V1) and second valve (V2) are connected to a mixing valve (V5),
f) the mixing valve (V5) is connected to the fourth valve (V4),
g) the fuel outlet (8) of the third tank (T3) is connected to the fourth valve (V4),
h) the fourth valve (V4) is connected to the fuel inflow (4) of the injection pump (3), and
i) the fuel return (5) of the injection pump (3) is connected to the third valve (V3),
j) wherein, in a first state of the fuel line system (9), the first valve (V1) is switched into a first position (V11), the second valve (V2) is switched into a closed position (V21), the third valve (V3) is switched into a first position (V31) and the fourth valve (V4) is switched into a first position (V41), wherein it is possible to convey exclusively diesel fuel from the first tank (T1) to the fuel inflow (4) of the injection pump (3) and it is possible to convey diesel fuel from the fuel return (5) of the injection pump (3) exclusively to the fuel inlet (10) of the first tank (T1),
k) wherein, In a second state of the fuel line system (9), the first valve (V1) is switched into a second position (V12), the second valve (V2) is switched into an opened position (V22), the third valve (V3) is switched into a second position (V32) and the fourth valve (V4) is switched into a first position (V41), wherein it is possible to convey diesel fuel from the first tank (T1) and vegetable oil and/or fat from the second tank (T2) to the mixing valve (V5) and it is possible to convey the mixture from the mixing valve (V5) to the fuel inflow (4) of the injection pump (3) and it is possible to convey the mixture from the fuel return (5) of the injection pump (3) exclusively to the fuel inlet (11) of the third tank (T3), and
l) wherein, in a third state of the fuel line system (9), the first valve (V1) is switched into a first position (V11) or second position (V12), the second valve (V2) is switched into a closed position (V21), the third valve (V3) is switched into a second position (V32) and the fourth valve (V4) is switched into a second position (V42), wherein it is possible to convey exclusively the mixture of diesel fuel and vegetable oil and/or fat from the third tank (T3) to the fuel inflow (4) of the injection pump (3) and it is possible to convey the mixture from the fuel return (5) of the injection pump (3) exclusively to the fuel Inlet (11) of the third tank (T3).

5. Fuel supply device according to claim 4,
**characterised in that**,
in a fourth state of the fuel line system (9), the first valve (V1) is switched into a first position (V11), the second valve (V2) is switched into a closed position (V21), the third valve (V3) is switched into a second position (V32) and the fourth valve (V4) is switched into a first position (V41), wherein it is possible to convey exclusively diesel fuel from the first tank (T1) to the fuel inflow (4) of the injection pump (3) and it is possible to convey the diesel fuel and/or remaining mixture remnants from the fuel return (5) of the injection pump (3) exclusively to the fuel inlet (11) of the third tank (T3).

6. Fuel supply device according to one of claims 1 to 3, **characterised by**
a) a mixing valve (V6) with a diesel input (V61) and a vegetable oil and/or fat input (V62) and a mixture input (V63) and a fuel output (V64),
b) wherein, in a diesel position of the mixing valve (V6), only the diesel input (V61) is connected in terms of flow to the fuel output (V64),
c) wherein, in a mixing position of the mixing valve (V6), the diesel input (V61) and the vegetable oil and/or fat input (V62), but not the mixture input (V63), are connected in terms of flow to the fuel output (V64),
d) wherein, in a mixture position of the mixing valve (V6), only the mixture input (V63) is connected in terms of flow to the fuel outlet (V64),
e) the fuel outlet (6) of the first tank (T1) being connected to the diesel input (V61) of the mixing valve (V6),
f) the fuel outlet (7) of the second tank (T2) being connected to the vegetable oil and/or fat input (V62) of the mixing valve (V6),
g) a fuel inlet (10) of the first tank (T1) and a fuel inlet (11) of the third tank (T3) being connected to a seventh valve (V7), in particular a 3/2-way valve,
h) the mixing valve (V6) being connected to the fuel inflow (4) of the injection pump (3),
i) the fuel return (5) of the injection pump (3) being connected to the seventh valve (V7),
j) wherein, in a first state of the fuel line system (9), the mixing valve (V6) is switched into the diesel position and the seventh valve (V7) is switched into a first position (V71), wherein it is possible to convey exclusively diesel fuel from the first tank (T1) to the fuel inflow (4) of the injection pump (3) and it is possible to convey diesel fuel from the fuel return (5) of the injection pump (3) exclusively to the fuel inlet (10) of the first tank (T1),
k) wherein, in a second state of the fuel line system (9), the mixing valve (V6) is switched into the mixing position and the seventh valve (V7) is switched into a second position (V72), wherein it is possible to convey diesel fuel from the first tank (T1) and vegetable oil and/or fat from the second tank (T2) to the mixing valve (V6) and it is possible to convey the mixture from the mixing valve (V6) to the fuel inflow (4) of the injection pump (3) and it is possible to convey the mixture from the fuel return (5) of the injection pump (3) exclusively to the fuel inlet (11) of the third tank (T3), and
l) wherein, in a third state of the fuel line system (9), the mixing valve (V6) is switched into the mixture position and the seventh valve (V7) is switched into the second position (V72), wherein it is possible to convey exclusively the mixture of diesel fuel and vegetable oil and/or fat from the third tank (T3) to the fuel inflow (4) of the injection pump (3) and it is possible to convey the mixture from the fuel return (5) of the injection pump (3) exclusively to the fuel inlet (11) of the third tank (T3).

7. Fuel supply device according to claim 6, #
**characterised in that**,
in a fourth state of the fuel line system (9), the mixing valve (V6) is switched into the diesel state and the seventh valve (V7) is switched into the second position (V72), wherein it is possible to convey exclusively diesel fuel from the first tank (T1) to the fuel inflow (4) of the injection pump (3) and it is possible to convey the diesel fuel and/or remaining mixture remnants from the fuel return (5) of the injection pump (3) exclusively to the fuel inlet (11) of the third tank (T3).

8. Fuel supply device according to one of claims 1 to 3, **characterised by**
a) a mixing valve (V6) with a diesel input (V61) and a vegetable oil and/or fat input (V62) and a mixture input (V63) and a fuel output (V64),
b) the fuel outlet (6) of the first tank (T1) being connected to an eighth valve (V8), in particular a 3/2-way valve,
c) the eighth valve (V8) being connected to the diesel input (V61) of the mixing valve (V6) and to the fuel inflow (4) of the Injection pump (3),
d) wherein, in a mixing position of the mixing valve (V6), the diesel input (V61) and the vegetable oil and/or fat input (V62), but not the mixture input (V63), are connected in terms of flow to the fuel output (V64),
e) wherein, in a mixture position of the mixing valve (V6), only the mixture input (V63) is connected in terms of flow to the fuel outlet (V64),
f) the fuel outlet (7) of the second tank (T2) being connected to the vegetable oil and/or fat input (V62) of the mixing valve (V6),
g) a fuel inlet (10) of the first tank (T1) and a fuel inlet (11) of the third tank (T3) being connected to a seventh valve (V7), in particular a 3/2-way valve,
h) the mixing valve (V6) being connected to the fuel inflow (4) of the injection pump (3),
i) the fuel return (5) of the injection pump (3) being connected to the seventh valve (V7),
j) wherein, in a first state of the fuel line system (9), the eighth valve (V8) is switched into a first position (V81) and the vegetable oil and/or fat input (V62) and also the mixture input (V63) of the mixing valve (V6) are switched into a closed position and the seventh valve (V7) is switched Into a first position (V71), wherein it is possible to convey exclusively diesel fuel from the first tank (T1) to the fuel inflow (4) of the injection pump (3) and it is possible to convey diesel fuel from the fuel return (5) of the injection pump (3) exclusively to the fuel inlet (10) of the first tank (T1),
k) wherein, in a second state of the fuel line system (9), the eighth valve (V8) is switched into a second position (V82) and the mixing valve (V6) is switched into the mixing position and the seventh valve (V7) is switched into a second position (V72), wherein it is possible to convey diesel fuel from the first tank (T1) and vegetable oil and/or fat from the second tank (T2) to the mixing valve (V6) and it is possible to convey the mixture from the mixing valve (V6) to the fuel inflow (4) of the injection pump (3) and it is possible to convey the mixture from the fuel return (5) of the injection pump (3) exclusively to the fuel inlet (11) of the third tank (T3), and
l) wherein, in a third state of the fuel line system (9), the eighth valve (V8) is switched into a second position (V82) and the mixing valve (V6) is switched into the mixture position and the seventh valve (V7) is switched into the second position (V72), wherein it is possible to convey exclusively the mixture of diesel fuel and vegetable oil and/or fat from the third tank (T3) to the fuel inflow (4) of the injection pump (3) and it is possible to convey the mixture from the fuel return (5) of the injection pump (3) exclusively to the fuel inlet (11) of the third tank (T3).

9. Fuel supply device according to claim 8,
**characterised in that**,
in a fourth state of the fuel line system (9), the eighth valve (V8) is switched into a first position (V81) and the vegetable oil and/or fat input (V62) and also the mixture input (V63) of the mixing valve (V6) are switched into a closed position and the seventh valve (V7) is switched into the second position (V72), wherein it is possible to convey exclusively diesel fuel from the first tank (T1) to the fuel inflow (4) of the injection pump (3) and it is possible to convey the diesel fuel and/or remaining mixture remnants from the fuel return (5) of the injection pump (3) exclusively to the fuel inlet (11) of the third tank (T3).

10. Diesel engine (2) with an injection pump (3), comprising a fuel supply device (1) according to one of the preceding claims.

11. Method for operating a fuel supply device (1) for a diesel engine (2) with an injection pump (3), in particular a fuel supply device (1) according to one of claims 1 to 9,
a) wherein the fuel supply device (1) comprises
a1) at least a first tank (T1) for diesel fuel,
a2) at least a second tank (T2) for vegetable oil and/or fat, in particular used vegetable oil and/or fat,
a3) at least a third tank (T3) for receiving a mixture of the diesel fuel and the vegetable oil and/or fat,
a4) a fuel line system (9), comprising fuel lines (L) and fuel valves (V1; V2; V3; V4; V5; V6; V7; V8), between the tanks (T1; T2; T3) and the injection pump (3), and
a5) a control unit for controlling the flow of fuel through the fuel line system (9),
b) in which, during starting of the diesel engine (2) until the operating temperature of the diesel engine (2) is reached, in particular about 80 °C to about 95 °C, preferably about 87 °C to about 90 °C, in a first operating state of the fuel supply device (1), diesel fuel from the first tank (T1) is conveyed to the injection pump (3) and diesel fuel is conveyed from the injection pump (3) exclusively to the first tank (T1),
c) in which, after the operating temperature of the diesel engine (2) has been reached in a second operating state of the fuel supply device (1), diesel fuel from the first tank (T1) and vegetable oil and/or fat from a second tank (T2) are mixed, in particular in a mixing valve (V5; V6), and subsequently exclusively the mixture is conveyed to the injection pump (3) and the mixture is conveyed from the injection pump (3) to the third tank (T3) until a predefined upper filling level is reached or exceeded in the third tank (T3),
d) in which, after reaching or exceeding the predefined upper filling level in the third tank (T3) until a predefined lower filling level in the third tank (T3) is reached or undershot, in a third operating state of the fuel supply device (1), exclusively the mixture of diesel fuel and vegetable oil and/or fat from the third tank (T3) is conveyed to the injection pump (3) and the mixture is conveyed from the injection pump (3) exclusively to the third tank (T3),
e) in which, after the predefined lower filling level is reached or undershot again until the predefined upper filling level is reached or exceeded, again in the second operating state, diesel fuel from the first tank (T1) and vegetable oil and/or fat from the second tank (T2) is mixed, in particular in a mixing valve (V5; V6), and subsequently the mixture is conveyed to the injection pump (3) and the mixture is conveyed from the injection pump (3) exclusively to the third tank (T3),
f) in which subsequently the fuel supply device (1) continues to be operated alternately after step d) and after step e) until a stopping phase of the diesel engine (2) is introduced or until the diesel engine (2) is stopped.

12. Method according to claim 11,
**characterised in that**,
when a stopping phase of the diesel engine (2) is introduced in a fourth operating state of the fuel supply device (1), exclusively diesel fuel from the first tank (T1) is conveyed to the injection pump (3) and diesel fuel and/or remaining mixture remnants are conveyed from the injection pump (3) exclusively to the third tank (T3) for a time which is predefined in particular as a function of the line volume to be flushed.

13. Method according to claim 12,
**characterised in that**,
after the predefined time has elapsed, the diesel engine (2) is finally switched off or, until the final switching-off of the diesel engine (2) in the first operating state of the fuel supply device (1), diesel fuel from the first tank (T1) is conveyed to the injection pump (3) and diesel fuel is conveyed from the injection pump (3) exclusively to the first tank (T1).

14. Method according to one of claims 11 to 13,
**characterised in that**
the vegetable oil and/or fat in the second tank (T2) and/or after leaving the second tank (T2) and/or the mixture before entering the injection pump (3) is heated, in particular to about 60 °C to 70 °C, in particular by one or more heating devices (W1, W2, W3), preferably electrically operated heating devices and/or heat exchangers (W1, W2, W3), which transmit heat from the fuel returning from the injection pump (3) to the fuel running to the injection pump (3).

15. Method according to one of claims 11 to 14,
**characterised in that**,
in the second operating state of the fuel supply device (1), during mixing of diesel fuel and vegetable oil and/or fat, in particular in a mixing valve (V6), a mixture is generated having a mixing ratio in the range of from 7 % diesel and 93 % vegetable oil and/or fat to 93 % diesel and 7 % vegetable oil and/or fat, in particular a mixing ratio in the range of from 15 % diesel and 85 % vegetable oil and/or fat to 20 % diesel and 80 % vegetable oil and/or fat, preferably of about 18 % diesel and 82 % vegetable oil and/or fat.

## Revendications

1. Dispositif d'alimentation de carburant (1) pour un moteur diesel (2) équipe d'une pompe à injection (3), qui alimente un injecteur en carburant et qui présente une arrivée de carburant (4) et un retour de carburant (5), comprenant
a) au moins un premier réservoir (T1) pour le gazole,
**caractérisé en ce que** le dispositif d'alimentation de carburant comprend également
b) au moins un deuxième réservoir (T2) pour de l'huile végétale et/ou la graisse végétale, en particulier de l'huile végétale usagée et/ou de la graisse végétale usagée
c) au moins un troisième réservoir (T3) pour le logement d'un mélange du gazole et de l'huile végétale et/ou de la graisse végétale,
d) chacun des au moins trois réservoirs (T1; T2; T3) présentant au moins une sortie de carburant (6; 7; 8),
e) un système de conduites de carburant (9) comprenant des conduites de carburant (L) et des soupapes de carburant (V1; V2; V3; V4; V5; V6; V7; V8),
e1) lequel relie les sorties de carburant (6; 7; 8) de tous les réservoirs (T1; T2; T3) à l'arrivée de carburant (4) de la pompe à injection (3) et
e2) qui relie le retour de carburant (5) de la pompe à injection (3) à une entrée de carburant (10) du premier réservoir (T1) et une entrée de carburant (11) du troisième réservoir (T3), et
f) une unité de commande pour la commande du flux de carburant dans le système de conduites de carburant (9),
g) sachant que, dans un premier état du système de conduites de carburant (9), seule du gazole provenant du premier réservoir (T1) peut être transporté à l'arrivée de carburant (4) de la pompe à injection (3) et du gazole provenant du retour de carburant (5) de la pompe à injection (3) peut être transporté uniquement à l'entrée de carburant (10) du premier réservoir (T1),
h) sachant que, dans un deuxième état du système de conduites de carburant (9), du gazole provenant du premier réservoir (T1) et de l'huile végétale et/ou la graisse végétale provenant du deuxième réservoir (T2) peut être transporté avec un mélange préalable dans le système de conduites de carburant (9) à l'arrivée de carburant (4) de la pompe à injection (3) et le mélange provenant du retour de carburant (5) de la pompe à injection (3) peut être transporté uniquement à l'entrée de carburant (11) du troisième réservoir (T3), et
i) sachant que, dans un troisième état du système de conduites de carburant (9), seul le mélange de gazole et d'huile végétale et/ou de graisse végétale provenant du troisième réservoir (T3) peut être transporté à l'arrivée de carburant (4) de la pompe à injection (3) et le mélange provenant du retour de carburant (5) de la pompe à injection (3) peut être transporté uniquement à l'entrée de carburant (11) du troisième réservoir (T3).

2. Dispositif d'alimentation de carburant selon la revendication 1,
**caractérisé en ce que**,
dans un quatrième état du système de conduites de carburant (9), seul du gazole provenant du premier réservoir (T1) peut être transporté à l'arrivée de carburant (4) de la pompe à injection (3) et le gazole et/ou des restes de mélange encore présents provenant du retour de carburant (5) de la pompe à injection (3) peuvent être transportés uniquement à l'entrée de carburant (11) du troisième réservoir (T3).

3. Dispositif d'alimentation de carburant selon la revendication 1 ou 2, **caractérisé en ce que**
le système de conduites de carburant (9) comporte une soupape de mélange (V5; V6) pour la mise à disposition d'un mélange de gazole provenant du premier réservoir (T1) et d'huile végétale et/ou de graisse végétale provenant du deuxième réservoir (T2).

4. Dispositif d'alimentation de carburant selon l'une quelconque des revendications précédentes,
**caractérisé en ce que**
a) la sortie de carburant (6) du premier réservoir (T1) est reliée à une première soupape (V1), en particulier une soupape à 3/2 voies,
b) la sortie de carburant (7) du deuxième réservoir (T2) est reliée à une deuxième soupape (V2), en particulier une soupape à 2/2 voies,
c) une entrée de carburant (10) du premier réservoir (T1) et une entrée de carburant (11) du troisième réservoir (T3) sont reliées à une troisième soupape (V3), en particulier une soupape à 3/2 voies,
d) la première soupape (V1) est reliée à une quatrième soupape (V4), en particulier une soupape à 3/2 voies,
e) la première soupape (V1) et la deuxième soupape (V2) sont reliées à une soupape de mélange (V5),
f) la soupape de mélange (V5) est reliée à la quatrième soupape (V4),
g) la sortie de carburant (8) du troisième réservoir (T3) est reliée à la quatrième soupape (V4),
h) la quatrième soupape (V4) est reliée à l'arrivée de carburant (4) de la pompe à injection (3) et
i) le retour de carburant (5) de la pompe à injection (3) est relié à la troisième soupape (V3),
j) sachant que, dans premier état du système de conduites de carburant (9), la première soupape (V1) est commutée dans une première position (V11), la deuxième soupape (V2) dans une position fermée (V21), la troisième soupape (V3) dans une première position (V31) et la quatrième soupape (V4) dans une première position (V41), sachant que seul du gazole provenant du premier réservoir (T1) peut être transporté à l'arrivée de carburant (4) de la pompe à injection (3) et du gazole provenant du retour de carburant (5) de la pompe à injection (3) peut être transporté uniquement à l'entrée de carburant (10) du premier réservoir (T1),
k) sachant que, dans un deuxième état du système de conduites de carburant (9), la première soupape (V1) est commutée dans une deuxième position (V12), la deuxième soupape (V2) dans une position ouverte (V22), la troisième soupape (V3) dans une deuxième position (V32) et la quatrième soupape (V4) dans une première position (V41), du gazole provenant du premier réservoir (T1) et de l'huile végétale et/ou de la graisse végétale provenant du deuxième réservoir (T2) pouvant être transportés à la soupape de mélange (V5) et le mélange provenant de la soupape de mélange (V5) pouvant être transporté à l'arrivée de carburant (4) de la pompe à injection (3) et le mélange provenant du retour de carburant (5) de la pompe à injection (3) pouvant être transporté uniquement à l'entrée de carburant (11) du troisième réservoir (T3), et
l) sachant que, dans un troisième état du système de conduites de carburant (9), la première soupape (V1) est commutée dans une première position (V11) ou une deuxième position (V12), la deuxième soupape (V2) dans une position fermée (V21), la troisième soupape (V3) dans une deuxième position (V32) et la quatrième soupape (V4) dans une deuxième position (V42), seul le mélange de gazole et d'huile végétale et/ou de graisse végétale provenant du troisième réservoir (T3) pouvant être transporté à l'arrivée de carburant (4) de la pompe à injection (3) et le mélange provenant du retour de carburant (5) de la pompe à injection (3) pouvant être transporté uniquement à l'entrée de carburant (11) du troisième réservoir (T3).

5. Dispositif d'alimentation de carburant selon la revendication 4,
**caractérisé en ce que**,
dans un quatrième état du système de conduites de carburant (9), la première soupape (V1) est commutée dans une première position (V11), la deuxième soupape (V2) dans une position fermée (V21), la troisième soupape (V3) dans une deuxième position (V32) et la quatrième soupape (V4) dans une première position (V41), seul du gazole provenant du premier réservoir (T1) pouvant être transporté à l'arrivée de carburant (4) de la pompe à injection (3) et le gazole et/ou des restes de mélange encore présents provenant du retour de carburant (5) de la pompe à injection (3) pouvant être transportés uniquement à l'entrée de carburant (11) du troisième réservoir (T3).

6. Dispositif d'alimentation de carburant selon l'une quelconque des revendications 1 à 3
**caractérisé par**
a) une soupape de mélange (V6) avec une entrée de gazole (V61) et une entrée d'huile végétale et/ou de graisse végétale (V62) et une entrée de mélange (V63) et une sortie de carburant (V64),
b) sachant que, lorsque la soupape de mélange (V6) est dans une position de diesel, seule l'entrée de diesel (V61) est reliée au niveau de l'écoulement à la sortie de carburant (V64),
c) sachant que, lorsque la soupape de mélange (V6) est dans une position de mélange, l'entrée de diesel (V61) et l'entrée d'huile végétale et/ou l'entrée de graisse végétale (V62), et non pas l'entrée de mélange (V63) sont reliées au niveau de l'écoulement à la sortie de carburant (V64),
d) sachant que, lorsque la soupape de mélange (V6) est dans une position de mélange, seule l'entrée de mélange (V63) est reliée au niveau de l'écoulement à la sortie de carburant (V64),
e) la sortie de carburant (6) du premier réservoir (T1) étant reliée à l'entrée de diesel (V61) de la soupape de mélange (V6),
f) la sortie de carburant (7) du deuxième réservoir (T2) étant reliée à l'entrée d'huile végétale et/ou l'entrée de graisse végétale (V62) de la soupape de mélange (V6),
g) une entrée de carburant (10) du premier réservoir (T1) et une entrée de carburant (11) du troisième réservoir (T3) étant reliées à une septième soupape (V7), en particulier une soupape à 3/2 voies,
h) la soupape de mélange (6) étant reliée à l'arrivée de carburant (4) de la pompe à injection (3),
i) le retour de carburant (5) de la pompe à injection (3) étant relié à la septième soupape (V7),
j) sachant que, dans un premier état du système de conduites de carburant (9), la soupape de mélange (V6) est commutée dans la position de diesel et la septième soupape (V7) dans une première position (V71), seul du gazole provenant du premier réservoir (T1) pouvant être transporté à l'arrivée de carburant (4) de la pompe à injection (3) et du gazole provenant du retour de carburant (5) de la pompe à injection (3) pouvant être transporté uniquement à l'entrée de carburant (10) du premier réservoir (T1),
k) sachant que, dans un deuxième état du système de conduites de carburant (9), la soupape de mélange (V6) est commutée dans la position de mélange et la septième soupape (V7) dans une position ouverte (V72), du gazole provenant du premier réservoir (T1) et de l'huile végétale et/ou de la graisse végétale provenant du deuxième réservoir (T2) pouvant être transportés à la soupape de mélange (V6) et le mélange provenant de la soupape de mélange (V6) pouvant être transporté à l'arrivée de carburant (4) de la pompe à injection (3) et le mélange provenant du retour de carburant (5) de la pompe à injection (3) pouvant être transporté uniquement à l'entrée de carburant (11) du troisième réservoir (T3), et
l) sachant que, dans un troisième état du système de conduites de carburant (9), la soupape de mélange (V6) est commutée dans la position de mélange et la septième soupape (V7) dans la deuxième position (V72), seul le mélange de gazole et d'huile végétale et/ou de graisse végétale provenant du troisième réservoir (T3) pouvant être transporté à l'arrivée de carburant (4) de la pompe à injection (3) et le mélange provenant du retour de carburant (5) de la pompe à injection (3) pouvant être transporté uniquement à l'entrée de carburant (11) du troisième réservoir (T3).

7. Dispositif d'alimentation de carburant selon la revendication 6,
**caractérisé en ce que**,
dans un quatrième état du système de conduites de carburant (9), la soupape de mélange (V6) est commutée dans l'état de diesel et la septième soupape (V7) dans la deuxième position (V72), seul du gazole provenant du premier réservoir (T1) pouvant être transporté à l'arrivée de carburant (4) de la pompe à injection (3) et le gazole et/ou des restes de mélange encore présents provenant du retour de carburant (5) de la pompe à injection (3) pouvant être transportés uniquement à l'entrée de carburant (11) du troisième réservoir (T3).

8. Dispositif d'alimentation de carburant selon l'une quelconque des revendications 1 à 3,
**caractérisé par**
a) une soupape de mélange (V6) avec une entrée de diesel (V61) et une entrée d'huile végétale et/ou de graisse végétale (V62) et une entrée de mélange (V63) et une sortie de carburant (V64),
b) la sortie de carburant (6) du premier réservoir (T1) étant reliée à une huitième soupape (V8), en particulier une soupape 3/2 voles,
c) la huitième soupape (V8) étant reliée à l'entrée de diesel (V61) de la soupape de mélange (V6) et à l'arrivée de carburant (4) de la pompe à injection (3),
d) sachant que, dans une position de mélange de la soupape de mélange (V6), l'entrée de diesel (V6) et l'entrée d'huile végétale et/ou l'entrée de graisse végétale (V62), mais pas l'entrée de mélange (V63) étant reliées au niveau de l'écoulement à la sortie de carburant (V64),
e) sachant que, dans une position de mélange de la soupape de mélange (V6), seule l'entrée de mélange (V63) est reliée au niveau de l'écoulement à la sortie de carburant (V64),
f) la sortie de carburant (7) du deuxième réservoir (T2) étant reliée à l'entrée d'huile végétale et/ou l'entrée de graisse végétale (V62) de la soupape de mélange (V6),
g) une entrée de carburant (10) du premier réservoir (T1) et une entrée de carburant (11) du troisième réservoir (T3) étant reliées à une septième soupape (V7), en particulier une soupape à 3/2 voies,
h) la soupape de mélange (V6) étant reliée à l'arrivée de carburant (4) de la pompe à injection (3),
i) le retour de carburant (5) de la pompe à injection (3) étant relié à la septième soupape (V7),
j) sachant que, dans un premier état du système de conduites de carburant (9), la huitième soupape (V8) est commutée dans une première position (V81) et l'entrée d'huile végétale et/ou l'entrée de graisse végétale (V62) ainsi que l'entrée de mélange (V63) de la soupape de mélange (V6) sont commutées dans une position fermée et la septième soupape (V7) dans une première position (V71), seul du gazole provenant du premier réservoir (T1) pouvant être transporté à l'arrivée de carburant (4) de la pompe à Injection (3) et du gazole provenant du retour de carburant (5) de la pompe à injection (3) pouvant être transporté uniquement à l'entrée de carburant (10) du premier réservoir (T1),
k) sachant que, dans un deuxième état du système de conduites de carburant (9), la huitième soupape (V8) est commutée dans une deuxième position (V82) et la soupape de mélange (V6) dans la position de mélange et la septième soupape (V7) dans une deuxième position (V72), du gazole provenant du premier réservoir (T1) et de l'huile végétale et/ou de la graisse végétale provenant du deuxième réservoir (T2) pouvant être transportés à la soupape de mélange (V6) et le mélange provenant de la soupape de mélange (V6) pouvant être transporté à l'arrivée de carburant (4) de la pompe à injection (3) et le mélange provenant du retour de carburant (5) de la pompe à injection (3) pouvant être transporté uniquement à l'entrée de carburant (11) du troisième réservoir (T3), et
l) sachant que, dans un troisième état du système de conduites de carburant (9), la huitième soupape (V8) est commutée dans une deuxième position (V82) et la soupape de mélange (V6) dans la position de mélange et la septième soupape (V7) dans la deuxième position (V72), seul le mélange de gazole et d'huile végétale et/ou de graisse végétale provenant du troisième réservoir (T3) pouvant être transporté à l'arrivée de carburant (4) de la pompe à injection (3) et le mélange provenant du retour de carburant (5) de la pompe à injection (3) pouvant être transporté uniquement à l'entrée de carburant (11) du troisième réservoir (T3).

9. Dispositif d'alimentation de carburant selon la revendication 8,
**caractérisé en ce que**,
dans un quatrième état du système de conduites de carburant (9), la huitième soupape (V8) est commutée dans une première position (V81) et l'entrée d'huile végétale et/ou l'entrée de graisse végétale (V62) ainsi que l'entrée de mélange (V63) de la soupape de mélange (V6) sont commutées dans une position fermée et la septième soupape (V7) dans la deuxième position (V72), seul du gazole provenant du premier réservoir (T1) pouvant être transporté à l'arrivée de carburant (4) de la pompe à injection (3) et le gazole et/ou des restes de mélange encore présents provenant du retour de carburant (5) de la pompe à injection (3) pouvant être transportés uniquement à l'entrée de carburant (11) du troisième réservoir (T3).

10. Moteur diesel (2) doté d'une pompe à injection (3), comprenant un dispositif d'alimentation de carburant (1) selon l'une quelconque des revendications précédentes.

11. Procédé pour faire fonctionner un dispositif d'alimentation de carburant (1) pour un moteur diesel (2) doté d'une pompe à injection (3), en particulier d'un dispositif d'alimentation de carburant (1) selon l'une quelconque des revendications 1 à 9,
a) le dispositif d'alimentation de carburant (1) comprenant
a1) au moins un premier réservoir (T1) pour du gazole,
a2) au moins un deuxième réservoir (T2) pour de l'huile végétale et/ou la graisse végétale, en particulier de l'huile végétale usagée et/ou la graisse végétale usagée,
a3) au moins un troisième réservoir (T3) pour le logement d'un mélange du gazole et de l'huile végétale et/ou de la graisse végétale,
a4) un système de conduites de carburant (9) comprenant des conduites de carburant (L) et des soupapes de carburant (V1; V2; V3; V4; V5; V6; V7; V8) entre les réservoirs (T1; T2; T3) et la pompe à injection (3) et
a5) une unité de commande pour la commande du flux de carburant dans le système de conduites de carburant (9),
b) dans lequel, lors du démarrage du moteur diesel (2) et jusqu'à ce qu'on atteigne la température de service du moteur diesel (2), en particulier environ 80°C à environ 95°C, de préférence environ 87°C jusqu'à environ 90°C, dans un premier état de service du dispositif d'alimentation de carburant (1), du gazole provenant du premier réservoir (T1) est transporté à la pompe à injection (3) et du gazole provenant de la pompe à injection (3) est transporté uniquement au premier réservoir (T1),
c) dans lequel, après avoir atteint la température de service du moteur diesel (2) dans un deuxième état de service du dispositif d'alimentation de carburant (1), du gazole provenant du premier réservoir (T1) et de l'huile végétale et/ou de graisse végétale provenant d'un deuxième réservoir (T2) sont mélangés, en particulier dans une soupape de mélange (V5; V6) et ensuite seul le mélange est transporté à la pompe à injection (3) et le mélange provenant de la pompe à injection (3) est transporté au troisième réservoir (T3), et ce jusqu'à ce qu'une hauteur de remplissage supérieure prédéfinie soit atteinte ou dépassée jusque dans le troisième réservoir (T3),
d) dans lequel, après avoir atteint ou dépassé la hauteur de remplissage supérieure prédéfinie dans le troisième réservoir (T3) et jusqu'à ce qu'on atteigne ou sous-dépasse une hauteur de remplissage inférieure prédéfinie dans le troisième réservoir (T3), dans un troisième état de service du dispositif d'alimentation de carburant (1), seul le mélange de gazole et d'huile végétale et/ou de graisse végétale provenant du troisième réservoir (T3) est transporté à la pompe à injection (3) et le mélange provenant de la pompe à injection (3) est transporté uniquement au troisième réservoir (T3),
e) dans lequel, après avoir atteint ou sous-dépassé à nouveau la hauteur de remplissage inférieure prédéfinie et jusqu'à ce qu'on atteigne ou dépasse la hauteur de remplissage supérieure prédéfinie, à nouveau dans le deuxième état de service, du gazole provenant du premier réservoir (T1) et de l'huile végétale et/ou de graisse végétale provenant du deuxième réservoir (T2) sont mélangés, en particulier dans une soupape de mélange (V5; V6) et ensuite seul le mélange est transporté à la pompe à injection (3) et le mélange provenant de la pompe à injection (3) est transporté uniquement au troisième réservoir (T3),
f) dans lequel ensuite le dispositif d'alimentation de carburant (1) est utilisé à nouveau en alternance après l'étape d) et après l'étape e), et ce jusqu'au déclenchement d'une phase d'arrêt du moteur diesel (2) ou jusqu'à l'arrêt du moteur diesel (2).

12. Procédé selon la revendication 11,
**caractérisé en ce que**,
lors de l'enclenchement d'une phase d'arrêt du moteur diesel (2) et dans un quatrième état de service du dispositif d'alimentation de carburant (1), seul du gazole provenant du premier réservoir (T1) est transporté à la pompe à injection (3) et du gazole et/ou des restes de mélange encore présents provenant de la pompe à injection (3) sont transportés uniquement au troisième réservoir (T3), et ce pour un temps prédéfini, en particulier en fonction du volume de conduite à traverser.

13. Procédé selon la revendication 12,
**caractérisé en ce que**,
après l'écoulement du temps prédéfini, le moteur diesel (2) est mis hors service définitivement ou bien jusqu'à la mise hors service définitive du moteur diesel (2) et dans le premier état de service du dispositif d'alimentation de carburant (1), du gazole provenant du premier réservoir (T1) est transporté à la pompe à injection (3) et du gazole provenant de la pompe à injection (3) est transporté uniquement au premier réservoir (T1).

14. Procédé selon l'une quelconque des revendications 11 à 13,
**caractérisé en ce que**
l'huile végétale et/ou la graisse végétale dans le deuxième réservoir (T2) et/ou après la sortie du deuxième réservoir (T2) et/ou le mélange avant l'entrée dans la pompe à injection (3) est chauffé, en particulier jusqu'à environ 60°C à 70°C, en particulier par un ou plusieurs dispositifs de chauffage (W1, W2, W3), de préférence des dispositifs de chauffage et/ou des échangeurs de chaleur (W1, W2, W3) fonctionnant à l'électricité, qui transfèrent de la chaleur provenant du carburant refluant de la pompe à injection (3) au carburant s'écoulant en direction de la pompe à injection (3).

15. Procédé selon l'une quelconque des revendications 11 à 14,
**caractérisé en ce que**,
dans le deuxième état de service du dispositif d'alimentation de carburant (1) et lors du mélange du gazole et de l'huile végétale et/ou la graisse végétale, en particulier dans une soupape de mélange (V6), un mélange est généré avec un rapport de mélange de l'ordre de 7 % de diesel et 93 % d'huile végétale et/ou de graisse végétale jusqu'à 93 % de diesel et 7 % d'huile végétale et/ou de graisse végétale, en particulier un rapport de mélange de l'ordre de 15 % de diesel et 85 % d'huile végétale et/ou de graisse végétale jusqu'à 20 % de diesel et 80 % d'huile végétale et/ou de graisse végétale, de préférence d'environ 18 % de diesel et 82 % d'huile végétale et/ou de graisse végétale.
